# EUROPEAN PATENT APPLICATION

(11) **EP 4 124 116 A1**
(43) Date of publication of application: **25.01.2023**
(21) Application number: 21771115.9
(22) Date of filing: 16.03.2021
(51) Int. Cl.: H04W 36/08, H04W 36/00, H04W 24/02

(54) **COMMUNICATION METHOD AND APPARATUS**

(30) Priority: 16.03.2020 CN 202010183605; 09.07.2020 CN 202010659183
(71) Applicant: Huawei Technologies Co., Ltd., Shenzhen, Guangdong 518129, (CN)
(72) Inventor: GENG, Tingting, Shenzhen, Guangdong 518129 (CN); YAN, Le, Shenzhen, Guangdong 518129 (CN)
(74) Representative: MERH-IP Matias Erny Reichl Hoffmann Patentanwälte PartG mbB
(86) International application number: PCT/CN2021/081157
(87) International publication number: WO 2021/185259

(57) **Abstract**

A communication method and apparatus are disclosed. The method includes: after receiving, from a source network device, a first message that enables a terminal device to hand over from the source network device to a target network device, maintaining data transmission with the source network device; and sending a first report if subsequently detecting that a connection between the terminal device and the source network device fails. The first report includes first indication information used to determine whether the connection between the terminal device and the source network device fails before the terminal device accesses the target network device. It can be learned that the terminal device may record information related to the failure of the connection between the terminal device and the source network device, and send the information to a network device by using the first report. In this way, the network device can identify, based on the information, a potential handover scenario that has a problem, so that a handover parameter is better adjusted or handover is more properly triggered, thereby improving a handover success rate of the terminal device.

## Description

### TECHNICAL FIELD

This application relates to the field of wireless communication technologies, and in particular, to a communication method and apparatus.

### BACKGROUND

In a handover process, after a terminal device receives a handover command, the terminal device disconnects from a source network device, and attempts to establish a connection to a target network device. To avoid a connection failure caused by improperly configuring a handover parameter by a network device, a mobility robustness optimization (mobility robustness optimization, MRO) mechanism may be introduced into a wireless communication system. The MRO mechanism means that the terminal device records a parameter in a mobility failure (for example, a radio link failure (radio link failure, RLF) or a handover failure (handover failure, HOF)) process in a mobility process, generates an RLF report, and sends the RLF report to the network device. The terminal device may report the parameter of the terminal device in the mobility failure process to the network device, so that the network device can identify a configuration problem of a mobility parameter of the terminal device, and optimize a mobility-related parameter in time.

However, in a dual active protocol stack (dual active protocol stack, DAPS) handover scenario, after receiving a handover command, the terminal device still maintains a connection to the source network device, and attempts to establish a connection to the target network device. Therefore, it may be considered that in the DAPS handover scenario, the terminal device establishes connections to the source network device and the target network device separately. When one of the connections fails, the terminal device may use the other connection. However, the existing MRO mechanism and RLF report cannot support the network device in optimizing the mobility parameter in the DAPS scenario.

### SUMMARY

Embodiments of this application provide a communication method and apparatus, to provide an MRO mechanism in a DAPS scenario, so as to improve a handover success rate of a terminal device.

According to a first aspect, an embodiment of this application provides a communication method. The method may be performed by a terminal device, or may be performed by a component (for example, a chip or a circuit) that may be configured in the terminal device. The method may include: receiving a first message from a source network device, where the first message is used to enable the terminal device to hand over from the source network device to a target network device; maintaining data transmission between the terminal device and the source network device after receiving the first message; detecting that a connection between the terminal device and the source network device fails; and sending a first report to the network device. The first report includes first indication information, and the first indication information is used to determine whether the connection between the terminal device and the source network device fails before the terminal device accesses the target network device.

In this embodiment of this application, the terminal device may record information related to the failure of the connection between the terminal device and the source network device, and send the information to the network device by using the first report. In this case, the network device can identify a potential scenario of delayed handover based on the information, so that a handover parameter is better adjusted or handover is triggered earlier, thereby improving a handover success rate of the terminal device.

In a possible design of the first aspect, before the terminal device accesses the target network device, the failure of the connection between the terminal device and the source network device may be detected. Correspondingly, the first report may further include one or more of the following time period information: first time period information, where the first time period information indicates a time period from a time point of receiving the first message to a time point of detecting that the connection between the terminal device and the source network device fails; second time period information, where the second time period information indicates a time period from a time point of detecting that the connection between the terminal device and the source network device fails to a time point of sending the first report; third time period information, where the third time period information indicates a time period from a time point of detecting that the connection between the terminal device and the source network device fails to a time point of accessing the target network device by the terminal device; and fourth time period information, where the fourth time period information indicates a time period from a time point of accessing the target network device by the terminal device to a time point of sending the first report. In this case, the network device can more comprehensively learn of occurrence time of key events in a handover process of the terminal device in a scenario in which the connection between the terminal device and the source network device fails before the terminal device accesses the target network device.

In a possible design of the first aspect, after the terminal device accesses the target network device, the failure of the connection between the terminal device and the source network device may be detected. Correspondingly, the first report may further include one or more of the following time period information: first time period information, where the first time period information indicates a time period from a time point of receiving the first message to a time point of detecting that the connection between the terminal device and the source network device fails; second time period information, where the second time period information indicates a time period from a time point of detecting that the connection between the terminal device and the source network device fails to a time point of sending the first report; fourth time period information, where the fourth time period information indicates a time period from a time point of accessing the target network device by the terminal device to a time point of sending the first report; fifth time period information, where the fifth time period information indicates a time period from a time point of receiving the first message to a time point of accessing the target network device by the terminal device; and sixth information period information, where the sixth time period information indicates a time period from a time point of accessing the target network device by the terminal device to a time point of detecting that the connection between the terminal device and the source network device fails. In this case, the network device can more comprehensively learn of occurrence time of key events in a handover process of the terminal device in a scenario in which the connection between the terminal device and the source network device fails after the terminal device accesses the target network device.

In a possible design of the first aspect, the method further includes: receiving conditional handover configuration information from the source network device, where the conditional handover configuration information includes a trigger condition of conditional handover and at least one candidate target network device; and if the trigger condition of the conditional handover is met, determining the target network device in the at least one candidate target network device. Correspondingly, the first report may further include second indication information. The second indication information may indicate that the failure of the connection between the terminal device and the source network device is detected before the trigger condition of the conditional handover is met, or the second indication information may indicate that the failure of the connection between the terminal device and the source network device is detected after the trigger condition of the conditional handover is met and before the terminal device accesses the target network device, or the second indication information may indicate that the failure of the connection between the terminal device and the source network device is detected after the trigger condition of the conditional handover is met and after the terminal device accesses the target network device.

The technical solution in this embodiment of this application may also be applied to a conditional handover scenario. In this case, the first report may further include the second indication information that indicates a sequence relationship among events: for example, the failure of the connection between the terminal device and the source network device is detected, the trigger condition of the conditional handover is met, and the terminal device accesses the target network device. Therefore, occurrence time of key events in a handover process is more accurately reflected.

In a possible design of the first aspect, the first report may further include one or more of the following information: cell information of the source network device and/or the target network device, and cell quality information corresponding to the source network device and/or the target network device at at least one time point. In this case, the network device can determine, based on the cell information and the cell quality information in the first report, whether the handover parameter is properly configured.

In a possible design of the first aspect, the first report may further include information about the at least one time point, and the at least one time point includes one or more of the following time points: a time point of receiving the first message, a time point of detecting that the connection between the terminal device and the source network device fails, a time point of accessing the target network device by the terminal device, a time point at which the trigger condition of the conditional handover is met, and a time point of sending the first report.

In a possible design of the first aspect, the first report may further include handover type information, and the handover type information indicates any handover type of common handover, dual active protocol stack DAPS handover, the conditional handover, or a combination of the DAPS handover and the conditional handover. In this case, the network device can further identify, based on the handover type information, a handover parameter to be adjusted.

In a possible design of the first aspect, the method further includes: receiving third indication information from the source network device, where the third indication information indicates whether the first report shall be recorded.

In a possible design of the first aspect, the third indication information may specifically indicate whether the first report shall be recorded when the connection between the terminal device and the source network device fails before the terminal device accesses the target network device; the third indication information may specifically indicate whether the first report shall be recorded when the connection between the terminal device and the source network device fails after the terminal device accesses the target network device; the third indication information may specifically indicate whether the first report shall be recorded when the connection between the terminal device and the source network device does not fail when the terminal device receives a first release message from the target network device; the third indication information may specifically indicate whether the first report shall be recorded when the handover type is the combination of the DAPS handover and the conditional handover; or the third indication information may specifically indicate whether the first report shall be recorded when the connection between the terminal device and the source network device fails before a first time point when the handover type is the DAPS handover.

According to a second aspect, an embodiment of this application provides a communication method. The method may be performed by a network device (for example, a third network device), or may be performed by a component (for example, a chip or a circuit) configured in the network device. The method may include: receiving a first report from a terminal device, where the first report includes first indication information, and the first indication information is used to determine whether a connection between the terminal device and a source network device fails before the terminal device accesses a target network device; and sending the first report to the source network device.

In this embodiment of this application, the third network device may forward, to the source network device, the first report received from the terminal device. In this way, the source network device learns of information related to the failure of the connection between the terminal device and the source network device, and identifies a potential scenario of delayed handover based on the information, so that a handover parameter is better adjusted or handover is triggered earlier, thereby improving a handover success rate of the terminal device.

In a possible design of the second aspect, the connection between the terminal device and the source network device may fail before the terminal device accesses the target network device. Correspondingly, the first report may further include one or more of the following time period information:
first time period information, where the first time period information indicates a time period from a time point of receiving a first message by the terminal device to a time point of detecting, by the terminal device, that the connection between the terminal device and the source network device fails, and the first message is used to enable the terminal device to hand over from the source network device to the target network device; second time period information, where the second time period information indicates a time period from a time point of detecting, by the terminal device, that the connection between the terminal device and the source network device fails to a time point of sending the first report by the terminal device; third time period information, where the third time period information indicates a time period from a time point of detecting, by the terminal device, that the connection between the terminal device and the source network device fails to a time point of accessing the target network device by the terminal device; and fourth time period information, where the fourth time period information indicates a time period from a time point of accessing the target network device by the terminal device to a time point of sending the first report by the terminal device. In this case, the source network device can more comprehensively learn of occurrence time of key events in a handover process of the terminal device in a scenario in which the connection between the terminal device and the source network device fails before the terminal device accesses the target network device.

In a possible design of the second aspect, the connection between the terminal device and the source network device may alternatively fail after the terminal device accesses the target network device. Correspondingly, the first report further includes one or more of the following time period information:
first time period information, where the first time period information indicates a time period from a time point of receiving a first message by the terminal device to a time point of detecting, by the terminal device, that the connection between the terminal device and the source network device fails, and the first message is used to enable the terminal device to hand over from the source network device to the target network device; second time period information, where the second time period information indicates a time period from a time point of detecting, by the terminal device, that the connection between the terminal device and the source network device fails to a time point of sending the first report by the terminal device; fourth time period information, where the fourth time period information indicates a time period from a time point of accessing the target network device by the terminal device to a time point of sending the first report by the terminal device; fifth time period information, where the fifth time period information indicates a time period from a time point of receiving the first message by the terminal device to a time point of accessing the target network device by the terminal device; and sixth information period information, where the sixth time period information indicates a time period from a time point of accessing the target network device by the terminal device to a time point of detecting, by the terminal device, that the connection between the terminal device and the source network device fails. In this case, the network device can more comprehensively learn of occurrence time of key events in a handover process of the terminal device in a scenario in which the connection between the terminal device and the source network device fails after the terminal device accesses the target network device.

In a possible design of the second aspect, the first report may further include second indication information. The second indication information may indicate that before a trigger condition of conditional handover is met, the terminal device detects that the connection between the terminal device and the source network device fails. Alternatively, the second indication information may indicate that after the trigger condition of the conditional handover is met and before the terminal device accesses the target network device, the terminal device detects that the connection between the terminal device and the source network device fails. Alternatively, the second indication information may indicate that after the trigger condition is met and after the terminal device accesses the target network device, the terminal device detects that the connection between the terminal device and the source network device fails.

The technical solution in this embodiment of this application may also be applied to a conditional handover scenario. In this case, the first report may further include the second indication information that indicates a sequence relationship among events: for example, the failure of the connection between the terminal device and the source network device is detected, the trigger condition of the conditional handover is met, and the terminal device accesses the target network device. Therefore, occurrence time of key events in a handover process is more accurately reflected.

In a possible design of the second aspect, the first report may further include one or more of the following information: cell information of the source network device and/or the target network device, and cell quality information corresponding to the source network device and/or the target network device at at least one time point. In this case, the network device can determine, based on the cell information and the cell quality information in the first report, whether the handover parameter is properly configured.

In a possible design of the second aspect, the first report further includes information about the at least one time point, and the at least one time point includes one or more of the following time points: a time point of receiving the first message by the terminal device, a time point of detecting, by the terminal device, that the connection between the terminal device and the source network device fails, a time point of accessing the target network device by the terminal device, a time point at which the trigger condition of the conditional handover is met, and a time point of sending the first report by the terminal device.

In a possible design of the second aspect, the first report may further include handover type information, and the handover type information indicates any handover type of common handover, dual active protocol stack DAPS handover, the conditional handover, or a combination of the DAPS handover and the conditional handover. In this case, the network device can further identify, based on the handover type information, a handover parameter to be adjusted.

In a possible design of the second aspect, the sending the first report to the source network device may be: sending the first report to a core network device, and forwarding, by the core network device, the first report to the source network device.

According to a third aspect, an embodiment of this application provides a communication method. The method may be performed by a terminal device, or may be performed by a component (for example, a chip or a circuit) that may be configured in the terminal device. The method may include: receiving a first message from a source network device, where the first message is used to enable the terminal device to hand over from the source network device to a target network device; maintaining data transmission between the terminal device and the source network device; successfully accessing the target network device; and sending a first report to the network device. The first report includes fourth indication information and/or eighth time period information. The fourth indication information is used to determine whether a connection between the terminal device and the source network device fails. The eighth time period information indicates a time period from a time point of receiving the first message to a time point of receiving a first release message from the target network device. The first release message indicates the terminal device to release the connection between the terminal device and the source network device.

In this embodiment of this application, in a scenario in which the connection between the terminal device and the source network device does not fail and the terminal device successfully accesses the target network device, the terminal device may also record various information in a handover process, for example, the fourth indication information and/or the eighth time period information, and send the information to the network device by using the first report. In this way, the network device can determine whether there is a possible handover scenario, and a handover parameter can be more properly configured.

In a possible design of the third aspect, the method further includes: receiving conditional handover configuration information from the source network device, where the conditional handover configuration information includes a trigger condition of conditional handover and at least one candidate target network device; and if the trigger condition of the conditional handover is met, determining the target network device in the at least one candidate target network device. In this way, it can be learned that the foregoing technical solution may also be applied to a conditional handover scenario.

In a possible design of the third aspect, the first report may further include one or more of the following information: cell information of the source network device and/or the target network device, and cell quality information corresponding to the source network device and/or the target network device at at least one time point. In this case, the network device can determine, based on the cell information and the cell quality information in the first report, whether the handover parameter is properly configured.

In a possible design of the third aspect, the first report may further include information about the at least one time point, and the at least one time point includes one or more of the following time points: a time point of receiving the first message, a time point of successfully accessing the target network device, a time point of receiving the first release message, a time point at which the trigger condition of the conditional handover is met, and a time point of sending the first report.

In a possible design of the third aspect, the first report further includes handover type information, and the handover type information indicates any handover type of common handover, dual active protocol stack DAPS handover, the conditional handover, or a combination of the DAPS handover and the conditional handover. In this case, the network device can further identify, based on the handover type information, a handover parameter to be adjusted.

In a possible design of the third aspect, the method further includes: receiving third indication information from the source network device, where the third indication information indicates whether the first report shall be recorded.

In a possible design of the third aspect, the third indication information may specifically indicate whether the first report shall be recorded when the connection between the terminal device and the source network device fails before the terminal device accesses the target network device; the third indication information may specifically indicate whether the first report shall be recorded when the connection between the terminal device and the source network device fails after the terminal device accesses the target network device; the third indication information may specifically indicate whether the first report shall be recorded when the connection between the terminal device and the source network device does not fail when the terminal device receives a first release message from the target network device; the third indication information may specifically indicate whether the first report shall be recorded when the handover type is the combination of the DAPS handover and the conditional handover; or the third indication information may specifically indicate whether the first report shall be recorded when the connection between the terminal device and the source network device fails before a first time point when the handover type is the DAPS handover.

According to a fourth aspect, an embodiment of this application provides a communication method. The method may be performed by a network device (for example, a third network device), or may be performed by a component (for example, a chip or a circuit) configured in the network device. The method may include: receiving a first report from a terminal device, where the first report includes fourth indication information and/or eighth time period information. The fourth indication information is used to determine whether a connection between the terminal device and a source network device fails. The eighth time period information indicates a time period from a time point of receiving, by the terminal device, a first message to a time point of receiving, by the terminal device, a first release message from a target network device. The first release message indicates the terminal device to release the connection between the terminal device and the source network device. The method further includes: sending the first report to the source network device.

In this embodiment of this application, in a scenario in which the connection between the terminal device and the source network device does not fail and the terminal device successfully accesses the target network device, the terminal device may also record various information in a handover process, for example, the fourth indication information and/or the eighth time period information, and send the information to the network device such as the third network device by using the first report. Correspondingly, the network device may forward the first report to the source network device. In this way, the source network device can determine, based on the information included in the first report, whether there is a possible handover scenario, and a handover parameter can be more properly configured.

In a possible design of the fourth aspect, the first report may further include one or more of the following information: cell information of the source network device and/or the target network device, and cell quality information corresponding to the source network device and/or the target network device at at least one time point. In this case, the network device can determine, based on the cell information and the cell quality information in the first report, whether the handover parameter is properly configured.

In a possible design of the fourth aspect, the first report further includes information about the at least one time point, and the at least one time point includes one or more of the following time points: a time point of receiving the first message by the terminal device, a time point of successfully accessing the target network device by the terminal device, a time point of receiving the first release message by the terminal device, a time point at which a trigger condition of conditional handover is met, and a time point of sending the first report by the terminal device.

In a possible design of the fourth aspect, the first report may further include handover type information, and the handover type information indicates any handover type of common handover, dual active protocol stack DAPS handover, the conditional handover, or a combination of the DAPS handover and the conditional handover. In this case, the network device can further identify, based on the handover type information, a handover parameter to be adjusted.

In a possible design of the fourth aspect, the sending the first report to the source network device may be: sending the first report to a core network device, and forwarding, by the core network device, the first report to the source network device.

According to a fifth aspect, an embodiment of this application provides a communication method. The method may be performed by a terminal device, or may be performed by a component (for example, a chip or a circuit) that may be configured in the terminal device. The method may include: receiving a first message from a source network device, where the first message enables the terminal device to hand over from the source network device to a target network device; maintaining data transmission between the terminal device and the source network device; detecting that a connection between the terminal device and the source network device fails; detecting that a connection between the terminal device and the target network device fails; and sending a first report to the network device. The first report includes one or more of fifth indication information, ninth time period information, and tenth time period information. The fifth indication information is used to determine whether both the connection between the terminal device and the source network device and the connection between the terminal device and the target network device fail. The ninth time period information indicates a time period from a time point of detecting that the connection between the terminal device and the source network device fails to a time point of detecting that the connection between the terminal device and the target network device fails. The tenth time period information indicates a time period from a time point of detecting that the connection between the terminal device and the target network device fails to a time point of sending the first report.

In this embodiment of this application, in a scenario in which the connection between the terminal device and the source network device fails, and the connection between the terminal device and the target network device also fails, the terminal device may also record various information in a handover process, for example, the fifth indication information, the ninth time period information, and the tenth time period information, and send the information to the network device such as a third network device by using the first report. In this way, the network device can determine whether there is a possible handover scenario, and a handover parameter can be more properly configured.

In a possible design of the fifth aspect, the method further includes: receiving conditional handover configuration information from the source network device, where the conditional handover configuration information includes a trigger condition of conditional handover and at least one candidate target network device; and if the trigger condition of the conditional handover is met, determining the target network device in the at least one candidate target network device. Correspondingly, the first report may further include second indication information. The second indication information may indicate that the failure of the connection between the terminal device and the source network device is detected before the trigger condition of the conditional handover is met, or the second indication information may indicate that the failure of the connection between the terminal device and the source network device is detected after the trigger condition of the conditional handover is met and before the terminal device accesses the target network device, or the second indication information may indicate that the failure of the connection between the terminal device and the source network device is detected after the trigger condition of the conditional handover is met and after the terminal device accesses the target network device.

The technical solution in this embodiment of this application may also be applied to a conditional handover scenario. In this case, the first report may further include the second indication information that indicates a sequence relationship among events: for example, the failure of the connection between the terminal device and the source network device is detected, the trigger condition of the conditional handover is met, the terminal device accesses the target network device, and the failure of the connection between the terminal device and the target network device is detected. Therefore, occurrence time of key events in a handover process is more accurately reflected.

In a possible design of the fifth aspect, the first report may further include one or more of the following information: cell information of the source network device and/or the target network device, and cell quality information corresponding to the source network device and/or the target network device at at least one time point. In this case, the network device can determine, based on the cell information and the cell quality information in the first report, whether the handover parameter is properly configured.

In a possible design of the fifth aspect, the first report may further include information about the at least one time point, and the at least one time point includes one or more of the following time points: a time point of receiving the first message, a time point of detecting that the connection between the terminal device and the source network device fails, a time point of detecting that the connection between the terminal device and the target network device fails, a time point at which the trigger condition of the conditional handover is met, and a time point of sending the first report.

In a possible design of the fifth aspect, the first report may further include handover type information, and the handover type information indicates any handover type of common handover, dual active protocol stack DAPS handover, the conditional handover, or a combination of the DAPS handover and the conditional handover. In this case, the network device can further identify, based on the handover type information, a handover parameter to be adjusted.

In a possible design of the fifth aspect, the method further includes: receiving third indication information from the source network device, where the third indication information indicates whether the first report shall be recorded.

In a possible design of the fifth aspect, the third indication information may specifically indicate whether the first report shall be recorded when the connection between the terminal device and the source network device fails before the terminal device accesses the target network device; the third indication information may specifically indicate whether the first report shall be recorded when the connection between the terminal device and the source network device fails after the terminal device accesses the target network device; the third indication information may specifically indicate whether the first report shall be recorded when the connection between the terminal device and the source network device does not fail when the terminal device receives a first release message from the target network device; the third indication information may specifically indicate whether the first report shall be recorded when the handover type is the combination of the DAPS handover and the conditional handover; or the third indication information may indicate whether the first report shall be recorded when the connection between the terminal device and the source network device fails before a first time point when the handover type is the DAPS handover.

According to a sixth aspect, an embodiment of this application provides a communication method. The method may be performed by a network device (for example, a third network device), or may be performed by a component (for example, a chip or a circuit) configured in the network device. The method may include: receiving a first report from a terminal device, where the first report includes one or more of fifth indication information, ninth time period information, and tenth time period information. The fifth indication information is used to determine whether both a connection between the terminal device and a source network device and a connection between the terminal device and a target network device fail. The ninth time period information indicates a time period from a time point of detecting, by the terminal device, that the connection between the terminal device and the source network device fails to a time point of detecting, by the terminal device, that the connection between the terminal device and the target network device fails. The tenth time period information indicates a time period from a time point of detecting, by the terminal device, that the connection between the terminal device and the target network device fails to a time point of sending the first report by the terminal device. The method further includes: sending the first report to the source network device.

In this embodiment of this application, in a scenario in which the connection between the terminal device and the source network device fails, and the connection between the terminal device and the target network device also fails, the terminal device may also record various information in a handover process, for example, fifth indication information, ninth time period information, and tenth time period information, and send the information to the network device such as the third network device by using the first report. Correspondingly, the network device may forward the first report to the source network device. In this way, the source network device can determine, based on the information included in the first report, whether there is a possible handover scenario, and a handover parameter can be more properly configured.

In a possible design of the sixth aspect, the first report may further include second indication information. The second indication information may indicate that before a trigger condition of conditional handover is met, the terminal device detects that the connection between the terminal device and the source network device fails. Alternatively, the second indication information may indicate that after the trigger condition of the conditional handover is met and before the terminal device accesses the target network device, the terminal device detects that the connection between the terminal device and the source network device fails. Alternatively, the second indication information may indicate that after the trigger condition is met and after the terminal device accesses the target network device, the terminal device detects that the connection between the terminal device and the source network device fails.

The technical solution in this embodiment of this application may also be applied to a conditional handover scenario. In this case, the first report may further include the second indication information that indicates a sequence relationship among events: for example, the failure of the connection between the terminal device and the source network device is detected, the trigger condition of the conditional handover is met, the terminal device accesses the target network device, and the failure of the connection between the terminal device and the target network device is detected. Therefore, occurrence time of key events in a handover process is more accurately reflected.

In a possible design of the sixth aspect, the first report may further include one or more of the following information: cell information of the source network device and/or the target network device, and cell quality information corresponding to the source network device and/or the target network device at at least one time point. In this case, the network device can determine, based on the cell information and the cell quality information in the first report, whether the handover parameter is properly configured.

In a possible design of the sixth aspect, the first report further includes information about the at least one time point, and the at least one time point includes one or more of the following time points: a time point of receiving the first message by the terminal device, a time point of detecting, by the terminal device, that the connection between the terminal device and the source network device fails, a time point of detecting, by the terminal device, that the connection between the terminal device and the target network device fails, a time point at which the trigger condition of the conditional handover is met, and a time point of sending the first report by the terminal device.

In a possible design of the sixth aspect, the first report may further include handover type information, and the handover type information indicates any handover type of common handover, dual active protocol stack DAPS handover, the conditional handover, or a combination of the DAPS handover and the conditional handover. In this case, the network device can further identify, based on the handover type information, a handover parameter to be adjusted.

In a possible design of the sixth aspect, the sending the first report to the source network device may be: sending the first report to a core network device, and forwarding, by the core network device, the first report to the source network device.

According to a seventh aspect, an embodiment of this application provides a communication method. The method may be performed by a core network device, or may be performed by a component (for example, a chip or a circuit) configured in the core network device. The method may include: receiving a first report from a third network device, where the first report includes first indication information, and the first indication information is used to determine whether a connection between a terminal device and a source network device fails before the terminal device accesses a target network device; and sending the first report to the source network device.

In this embodiment of this application, the core network device may alternatively receive the first report from a network device (for example, the third network device), and send the first report to the source network device. In this way, when the third network device cannot directly communicate with the source network device, the first report can still be forwarded. In this case, the source network device can identify a potential scenario of delayed handover based on the first report, so that a handover parameter is better adjusted or handover is triggered earlier, thereby improving a handover success rate of the terminal device.

In a possible design of the seventh aspect, the method may further include: sending capability information of the terminal device to the source network device, where the capability information indicates whether the terminal device supports recording the first report.

In a possible design of the seventh aspect, the connection between the terminal device and the source network device may fail before the terminal device accesses the target network device. Correspondingly, the first report may further include one or more of the following time period information:
first time period information, where the first time period information indicates a time period from a time point of receiving a first message by the terminal device to a time point of detecting, by the terminal device, that the connection between the terminal device and the source network device fails, and the first message is used to enable the terminal device to hand over from the source network device to the target network device; second time period information, where the second time period information indicates a time period from a time point of detecting, by the terminal device, that the connection between the terminal device and the source network device fails to a time point of sending the first report by the terminal device; third time period information, where the third time period information indicates a time period from a time point of detecting, by the terminal device, that the connection between the terminal device and the source network device fails to a time point of accessing the target network device by the terminal device; and fourth time period information, where the fourth time period information indicates a time period from a time point of accessing the target network device by the terminal device to a time point of sending the first report by the terminal device. In this case, the source network device can more comprehensively learn of occurrence time of key events in a handover process of the terminal device in a scenario in which the connection between the terminal device and the source network device fails before the terminal device accesses the target network device.

In a possible design of the seventh aspect, the connection between the terminal device and the source network device may alternatively fail after the terminal device accesses the target network device. Correspondingly, the first report further includes one or more of the following time period information:
first time period information, where the first time period information indicates a time period from a time point of receiving a first message by the terminal device to a time point of detecting, by the terminal device, that the connection between the terminal device and the source network device fails, and the first message is used to enable the terminal device to hand over from the source network device to the target network device; second time period information, where the second time period information indicates a time period from a time point of detecting, by the terminal device, that the connection between the terminal device and the source network device fails to a time point of sending the first report by the terminal device; fourth time period information, where the fourth time period information indicates a time period from a time point of accessing the target network device by the terminal device to a time point of sending the first report by the terminal device; fifth time period information, where the fifth time period information indicates a time period from a time point of receiving the first message by the terminal device to a time point of accessing the target network device by the terminal device; and sixth information period information, where the sixth time period information indicates a time period from a time point of accessing the target network device by the terminal device to a time point of detecting, by the terminal device, that the connection between the terminal device and the source network device fails. In this case, the network device can more comprehensively learn of occurrence time of key events in a handover process of the terminal device in a scenario in which the connection between the terminal device and the source network device fails after the terminal device accesses the target network device.

In a possible design of the seventh aspect, the first report may further include second indication information. The second indication information may indicate that before a trigger condition of conditional handover is met, the terminal device detects that the connection between the terminal device and the source network device fails. Alternatively, the second indication information may indicate that after the trigger condition of the conditional handover is met and before the terminal device accesses the target network device, the terminal device detects that the connection between the terminal device and the source network device fails. Alternatively, the second indication information may indicate that after the trigger condition is met and after the terminal device accesses the target network device, the terminal device detects that the connection between the terminal device and the source network device fails.

In a possible design of the seventh aspect, the first report may further include one or more of the following information: cell information of the source network device and/or the target network device, and cell quality information corresponding to the source network device and/or the target network device at at least one time point. In this case, the network device can determine, based on the cell information and the cell quality information in the first report, whether the handover parameter is properly configured.

In a possible design of the seventh aspect, the first report further includes information about the at least one time point, and the at least one time point includes one or more of the following time points: a time point of receiving the first message by the terminal device, a time point of detecting, by the terminal device, that the connection between the terminal device and the source network device fails, a time point of accessing the target network device by the terminal device, a time point at which the trigger condition of the conditional handover is met, and a time point of sending the first report by the terminal device.

In a possible design of the seventh aspect, the first report may further include handover type information, and the handover type information indicates any handover type of common handover, dual active protocol stack DAPS handover, the conditional handover, or a combination of the DAPS handover and the conditional handover. In this case, the network device can further identify, based on the handover type information, a handover parameter to be adjusted.

In a possible design of the seventh aspect, the first report may be the first report in any one of the fourth aspect or the possible designs of the fourth aspect, or the first report in any one of the sixth aspect or the possible designs of the sixth aspect. In other words, content included in the first report may be in the form in any one of the second aspect or the possible designs of the second aspect, may be in the form in any one of the fourth aspect or the possible designs of the fourth aspect, or may be in the form in any one of the sixth aspect or the possible designs of the sixth aspect.

According to an eighth aspect, an embodiment of this application further provides a communication method. The method may be performed by a terminal device, or may be performed by a component (for example, a chip or a circuit) that may be configured in the terminal device. For example, the method is performed by the terminal device. The method may include: The terminal device receives a first message from a source network device, where the first message is used to enable the terminal device to hand over from the source network device to a target network device. The terminal device maintains data transmission with the source network device. The terminal device detects that a connection between the terminal device and the target network device fails. When a cell of the source network device is available, the terminal device resumes a connection between the terminal device and the source network device. The terminal device sends a first report. The first report may include at least one of the following: fifth indication information, seventh indication information, tenth time period information, eleventh time period information, twelfth time period information, a time period from a time point of detecting, by the terminal device, that the connection between the terminal device and the target network device fails to a time point of initiating an RRC reestablishment procedure by the terminal device, and a time period from a time point of detecting, by the terminal device, that the connection between the terminal device and the target network device fails to a time point of successfully resuming the connection between the terminal device and the source network device.

According to a ninth aspect, an embodiment of this application further provides a communication method. The method may be performed by a third network device, or may be performed by a component (for example, a chip or a circuit) that may be configured in the third network device. In the method, a network device receives a first report from a terminal device. For details of the first report, refer to the descriptions in the eighth aspect.

According to a tenth aspect, an embodiment of this application provides a communication apparatus. The apparatus has a function of implementing the terminal device in any one of the first aspect or the possible designs of the first aspect, has a function of implementing the terminal device in any one of the third aspect or the possible designs of the third aspect, has a function of implementing the terminal device in any one of the fifth aspect or the possible designs of the fifth aspect, or has a function of implementing the terminal device in the eighth aspect. The apparatus may be a terminal device, or may be a chip included in the terminal device.

Alternatively, the apparatus may have a function of implementing the third network device in any one of the second aspect or the possible designs of the second aspect, have a function of implementing the third network device in any one of the fourth aspect or the possible designs of the fourth aspect, have a function of implementing the third network device in any one of the sixth aspect or the possible designs of the sixth aspect, or have a function of implementing the third network device in the ninth aspect. The third network device may be a source network device, a target network device, or another network device different from the source network device and the target network device. The apparatus may be a network device, or may be a chip included in the network device.

Alternatively, the apparatus may have a function of implementing the core network device in any one of the seventh aspect or the possible designs of the seventh aspect. The apparatus may be a core network device, or may be a chip included in the core network device.

The function of the communication apparatus may be implemented by hardware, or may be implemented by hardware by executing corresponding software. The hardware or the software includes one or more modules, units, or means (means) corresponding to the function.

In a possible design, a structure of the apparatus includes a processing module and a transceiver module. The processing module is configured to support the apparatus in performing a corresponding function of the terminal device in any one of the first aspect or the designs of the first aspect, a corresponding function of the third network device in any one of the second aspect or the designs of the second aspect, a corresponding function of the terminal device in any one of the third aspect or the possible designs of the third aspect, a corresponding function of the third network device in any one of the fourth aspect or the possible designs of the fourth aspect, a corresponding function of the terminal device in any one of the fifth aspect or the possible designs of the fifth aspect, a corresponding function of the third network device in any one of the sixth aspect or the possible designs of the sixth aspect, or a corresponding function of the third network device in any one of the seventh aspect or the possible designs of the seventh aspect. The transceiver module is configured to support communication between the apparatus and another communication device. For example, when the apparatus is a terminal device, the apparatus may send a first report to a third network device. The communication apparatus may further include a storage module. The storage module is coupled to the processing module, and stores program instructions and data that are necessary for the apparatus. In an example, the processing module may be a processor, a communication module may be a transceiver, and the storage module may be a memory. The memory may be integrated with the processor, or may be disposed separately from the processor. This is not limited in this application.

In another possible design, a structure of the apparatus includes a processor, and may further include a memory. The processor is coupled to the memory, and may be configured to execute the computer program instructions stored in the memory, to enable the apparatus to perform the method in any one of the first aspect or the possible designs of the first aspect, the method in any one of the second aspect or the possible designs of the second aspect, the method in any one of the third aspect or the possible designs of the third aspect, the method in any one of the fourth aspect or the possible designs of the fourth aspect, the method in any one of the fifth aspect or the possible designs of the fifth aspect, the method in any one of the sixth aspect or the possible designs of the sixth aspect, or the method in any one of the seventh aspect or the possible designs of the seventh aspect. Optionally, the apparatus further includes a communication interface, and the processor is coupled to the communication interface. When the apparatus is a network device or a terminal device, the communication interface may be a transceiver or an input/output interface. When the apparatus is a chip included in the network device or the terminal device, the communication interface may be an input/output interface of the chip. Optionally, the transceiver may be a transceiver circuit, and the input/output interface may be an input/output circuit.

According to an eleventh aspect, an embodiment of this application provides a chip system, including a processor. The processor is coupled to a memory, and the memory is configured to store a program or instructions. When the program or the instructions are executed by the processor, the chip system is enabled to implement the method in any one of the first aspect or the possible designs of the first aspect, the method in any one of the second aspect or the possible designs of the second aspect, the method in any one of the third aspect or the possible designs of the third aspect, the method in any one of the fourth aspect or the possible designs of the fourth aspect, the method in any one of the fifth aspect or the possible designs of the fifth aspect, the method in any one of the sixth aspect or the possible designs of the sixth aspect, the method in any one of the seventh aspect or the possible designs of the seventh aspect, or the method in the eighth aspect or the ninth aspect.

Optionally, the chip system further includes an interface circuit, and the interface circuit is configured to exchange code instructions with the processor.

Optionally, there may be one or more processors in the chip system, and the processor may be implemented by hardware or may be implemented by software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be separated from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

According to a twelfth aspect, an embodiment of this application provides a computer-readable storage medium. The computer-readable storage medium stores a computer program or instructions. When the computer program or the instructions are executed, a computer is enabled to perform the method in any one of the first aspect or the possible designs of the first aspect, the method in any one of the second aspect or the possible designs of the second aspect, the method in any one of the third aspect or the possible designs of the third aspect, the method in any one of the fourth aspect or the possible designs of the fourth aspect, the method in any one of the fifth aspect or the possible designs of the fifth aspect, the method in any one of the sixth aspect or the possible designs of the sixth aspect, the method in any one of the seventh aspect or the possible designs of the seventh aspect, or the method in the eighth aspect or the ninth aspect.

According to a thirteenth aspect, an embodiment of this application provides a computer program product. When a computer reads and executes the computer program product, the computer is enabled to perform the method in any one of the first aspect or the possible designs of the first aspect, the method in any one of the second aspect or the possible designs of the second aspect, the method in any one of the third aspect or the possible designs of the third aspect, the method in any one of the fourth aspect or the possible designs of the fourth aspect, the method in any one of the fifth aspect or the possible designs of the fifth aspect, the method in any one of the sixth aspect or the possible designs of the sixth aspect, the method in any one of the seventh aspect or the possible designs of the seventh aspect, or the method in the eighth aspect or the ninth aspect.

According to a fourteenth aspect, an embodiment of this application provides a communication system. The communication system includes a terminal device and a third network device. Optionally, the communication system may further include a source network device and a target network device. The third network device may be a same network device as the source network device or the target network device, or the third network device may be another network device different from the source network device and the target network device. Optionally, the communication system may further include a core network device.

### BRIEF DESCRIPTION OF DRAWINGS

FIG. 1 is a schematic diagram of a network architecture of a communication system to which an embodiment of this application is applicable;
FIG. 2 is a schematic flowchart of a communication method according to an embodiment of this application;
FIG. 3 is a schematic diagram of division of time periods when a terminal device detects, before accessing a target network device, that a connection between the terminal device and a source network device fails according to an embodiment of this application;
FIG. 4 is a schematic diagram of division of time periods when a terminal device detects, before accessing a target network device, that a connection between the terminal device and a source network device fails according to an embodiment of this application;
FIG. 5 is a schematic diagram of possible time points at which a terminal device detects, in a conditional handover scenario, that a connection between the terminal device and a source network device fails according to an embodiment of this application;
FIG. 6 is a schematic flowchart of another communication method according to an embodiment of this application;
FIG. 7 is a schematic flowchart of still another communication method according to an embodiment of this application;
FIG. 8 is a schematic structural diagram of a communication apparatus according to an embodiment of this application;
FIG. 9 is another schematic structural diagram of a communication apparatus according to an embodiment of this application;
FIG. 10 is a schematic structural diagram of another communication apparatus according to an embodiment of this application;
FIG. 11 is another schematic structural diagram of another communication apparatus according to an embodiment of this application;
FIG. 12 is a schematic structural diagram of still another communication apparatus according to an embodiment of this application; and
FIG. 13 is another schematic structural diagram of still another communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The technical solutions of embodiments of this application may be used in various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WIMAX) communication system, and a fifth generation (5th generation, 5G) system or a new radio (new radio, NR) system, or used in a future communication system or another similar communication system.

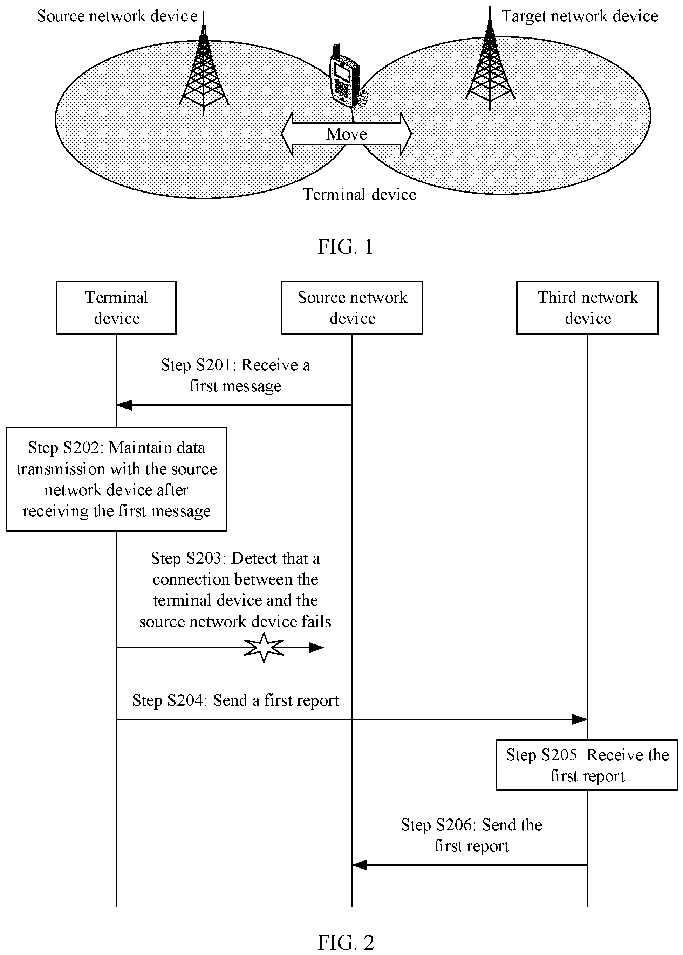

FIG. 1 is a schematic structural diagram of a communication system to which an embodiment of this application is applicable. The communication system includes a terminal device, a source network device, and a target network device. The source network device is a network device accessed by the terminal device before the terminal device performs cell handover. The target network device is a network device accessed by the terminal device after the terminal device performs cell handover. Correspondingly, a source cell is a cell accessed by the terminal device before the terminal device performs cell handover. The source cell is a cell covered by the source network device, or the source cell is a cell managed by the source network device. A target cell is a cell accessed by the terminal device after the terminal device performs cell handover. The target cell is a cell covered by the target network device, or the target cell is a cell managed by the target network device.

Optionally, the communication system may further include a third network device. The third network device is a network device to which the terminal device reports a radio link failure RLF report. The third network device may be the source network device, the target network device, or another network device different from the source network device and the target network device. In other words, the terminal device may send the RLF report to the source network device, may send the RLF report to the target network device, or may report the RLF report to another network device different from the source network device or the target network device. This is not limited in this application.

It should be understood that, in embodiments of this application, the terminal device may hand over from the source network device to the target network device due to a location movement, a service type change, or another reason. This is not limited in this application.

It should be further understood that the source network device, the target network device, or the third network device mentioned in embodiments of this application may be an access network device, for example, a base station. The access network device corresponds to different devices in different systems. For example, in a 5G system, the access network device corresponds to an access network device in 5G, for example, a gNB. In addition, the source network device, the target network device, and the third network device mentioned in embodiments of this application may be access network devices that support a same communication standard or different communication standards. This is not limited in this application.

In addition, although FIG. 1 shows only one terminal device, it may be understood that one network device may serve one or more terminal devices. A quantity of network devices and a quantity of terminal devices included in the communication system are not limited in embodiments of this application.

The following describes a DAPS handover mechanism in embodiments of this application.

### (1) For downlink (downlink, DL):

After sending a handover command message to the terminal device, the source network device may continue to send a downlink data packet to the terminal device. In addition, downlink data forwarding (data forwarding) may be performed between the source network device and the target network device. Specifically, the source network device may send, to the target network device, one or more PDCP service data units (service data units, SDUs) to which packet data convergence protocol (packet data convergence protocol, PDCP) sequence numbers (sequence numbers, SNs) are allocated and the PDCP SNs corresponding to the one or more PDCP service data units. For the PDCP SDUs received from the source network device, the target network device may perform processing such as header compression and encryption by using a header compression context, a key, and the like corresponding to the target network device, to generate PDCP protocol data units (protocol data units, PDUs). After the terminal device successfully hands over to the target network device (for example, after a random access RACH process succeeds or the target network device receives a radio resource control (radio resource control, RRC) reconfiguration complete message sent by the terminal device), the target network device may send the PDCP PDUs to the terminal device.

After receiving a handover command message, the terminal device maintains data transmission with the source network device. To be specific, the terminal device maintains a user plane protocol stack corresponding to a source base station, and does not perform layer 2 (where layer 2 includes a media access control (media access control, MAC)/radio link control (radio link control, RLC) /PDCP/service data adaptation protocol (service data adaptation protocol, SDAP) protocol layer) resumption/reestablishment on the user plane protocol stack corresponding to the source side. In addition, the terminal device establishes a user plane protocol stack corresponding to a target side, to perform random access and data transmission with the target network device. Before the terminal device releases a connection between the terminal device and the source network device, the terminal device maintains two sets of security keys (or security contexts) and two sets of header decompression contexts (or two sets of header compression contexts), and processes a received data packet by using a corresponding key/header decompression context based on whether a data packet is from the source network device or the target network device. Specifically, for a PDCP PDU received from the source network device, the terminal device performs processing such as header decompression by using a header decompression context corresponding to the source network device and decryption by using a security key corresponding to the source network device. For a PDCP PDU received from the target network device, the terminal device performs processing such as header decompression by using a header decompression context corresponding to the target network device and decryption by using a security key corresponding to the target network device.

### (2) For uplink (uplink, UL):

After receiving a handover command message, the terminal device may continue to transmit uplink data to the source network device. In addition, the terminal device performs a random access RACH procedure to the target network device. When the RACH procedure succeeds (for example, for a non-contention-based RACH procedure, when the terminal device receives a message MSG2 or a message msgB such as a random access response (random access response, RAR) message; for a contention-based RACH procedure, when the terminal device determines that a conflict resolves, for example, when the terminal device receives a contention conflict resolution message, and a conflict resolution identifier is a conflict resolution identifier corresponding to the terminal device), the terminal device hands over an uplink path. To be specific, after the RACH succeeds, the terminal device no longer performs uplink transmission of a new PDCP SDU with the source network device. Once the RACH succeeds, the UE starts to perform uplink transmission of a new PDCP SDU with the target network device.

Embodiments of this application further relate to conditional handover (conditional handover, CHO). The conditional handover means that the source network device may send a handover request message to at least one target network device, each of the at least one target network device may reserve a corresponding resource configuration for the terminal device, and the at least one target network device may be understood as candidate target network devices. The source network device sends conditional handover configuration information of the at least one target network device to the terminal device, and the terminal device determines, based on whether a trigger condition of the conditional handover is met, whether to perform handover. When the trigger condition of the conditional handover is met, the terminal device may initiate handover to one of the at least one candidate target network device.

The following explains and describes some terms in embodiments of this application, to help a person skilled in the art have a better understanding.
(1) The terminal device is a device having a wireless transceiver function, and may be deployed on land, where the deployment includes indoor or outdoor, handheld, wearable, or vehicle-mounted deployment, may be deployed on water (for example, on a ship), or may be deployed in air (for example, on an airplane, a balloon, and a satellite). The terminal device may communicate with a core network through a radio access network (radio access network, RAN), and exchange voice and/or data with the RAN. The terminal device may be a mobile phone (mobile phone), a tablet (Pad), a computer with a wireless transceiver function, a mobile internet device (mobile internet device, MID), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. The terminal device may also be sometimes referred to as user equipment (user equipment, UE), a mobile station, a remote station, or the like. A specific technology, a device form, and a name that are used by the terminal device are not limited in embodiments of this application.

By way of example and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, smart helmets, or smart jewelry for monitoring physical signs.

The terminal device in embodiments of this application may alternatively be a vehicle-mounted module, a vehicle-mounted module assembly, a vehicle-mounted component, a vehicle-mounted chip, or a vehicle-mounted unit that is built in a vehicle as one or more components or units. The vehicle may use the vehicle-mounted module, the vehicle-mounted module assembly, the vehicle-mounted component, the vehicle-mounted chip, or the vehicle-mounted unit that is built in the vehicle to implement the method in this application.

(2) The network device, also referred to as an access network device, is a device that is in a network and that is configured to connect the terminal device to a wireless network. The network device may be a node in a radio access network, and may also be referred to as a base station, or may be referred to as a radio access network (radio access network, RAN) node (or device). The network device may be configured to mutually convert a received over-the-air frame and an Internet Protocol (IP) packet and serve as a router between the wireless terminal and a rest portion of the access network, where the rest portion of the access network may include an IP network. The network device may further coordinate attribute management of the air interface.

The network device may include an evolved NodeB (NodeB, eNB, or e-NodeB, evolved NodeB) in a long term evolution (long term evolution, LTE) system or an LTE-advanced (LTE-Advanced, LTE-A) system, such as a conventional macro base station eNB, and a micro base station eNB in a heterogeneous network scenario; or may include a next generation NodeB (next generation NodeB, gNB) in a 5th generation (5th generation, 5G) new radio (new radio, NR) system; and may further include a radio network controller (radio network controller, RNC), a NodeB (NodeB, NB), a base station controller (base station controller, BSC), a base transceiver station (base transceiver station, BTS), a transmission reception point (transmission reception point, TRP), a home base station (for example, a home evolved NodeB or a home NodeB, HNB), a baseband unit (base band unit, BBU), a baseband pool BBU pool or a wireless fidelity (wireless fidelity, Wi-Fi) access point, an access point (access point, AP), an integrated access and backhaul (integrated access and backhaul, IAB) node, or the like; or may further include a centralized unit (centralized unit, CU) and/or a distributed unit (distributed unit, DU) in a cloud access network (cloud radio access network, CloudRAN) system. This is not limited in embodiments of this application.

For example, in a network structure, the network device may be a CU node, a DU node, or an access network device including the CU node and the DU node. Further, the CU node may be divided into a control plane (CU-CP) and a user plane (CU-UP). The CU-CP is responsible for control plane functions, and mainly includes radio resource control (radio resource control, RRC) and packet data convergence protocol (packet data convergence protocol, PDCP)-C. The PDCP-C is mainly responsible for encryption and decryption, integrity protection, data transmission, and the like of control plane data. The CU-UP is responsible for user plane functions, and mainly includes a service data adaptation protocol (service data adaptation protocol, SDAP) and a PDCP-U. The SDAP is mainly responsible for processing data of a core network and mapping a flow (flow) to a bearer (bearer). The PDCP-U is mainly responsible for encryption and decryption, integrity protection, header compression, sequence number maintenance, data transmission, and the like of a data plane. The CU-CP and the CU-UP may be connected through an El interface. The CU-CP indicates that the CU is connected to a core network through an Ng interface, and is connected to the DU through an F1-C (control plane) interface. The CU-UP is connected to the DU through F1-U (the user plane). Certainly, in another possible implementation, the PDCP-C is also in the CU-UP.

(3) It should be noted that the terms "system" and "network" may be used interchangeably in embodiments of this application. "A plurality of' means two or more. In view of this, "a plurality of' may also be understood as "at least two" in embodiments of this application. "At least one" may be understood as one or more, for example, one, two, or more. For example, "including at least one" means including one, two, or more, and does not limit which items are included. For example, if at least one of A, B, and C is included, A, B, C, A and B, A and C, B and C, or A, B, and C may be included. Similarly, understanding of the description such as "at least one type" is similar. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise stated, ordinal numbers such as "first" and "second" in embodiments of this application are used to distinguish between a plurality of objects, but are not intended to limit a sequence, a time sequence, priorities, or importance of the plurality of objects. In addition, descriptions of "first" and "second" do not necessarily indicate that objects are different.

It may be understood that in embodiments of this application, the terminal device and/or the network device may perform some or all of the steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be necessarily to be performed.

FIG. 2 is a schematic flowchart of a communication method according to an embodiment of this application. The method includes the following steps.

Step S201: A terminal device receives a first message from a source network device, where the first message is used to enable the terminal device to hand over from the source network device to a target network device.

The first message may be a reconfiguration message or another message. This is not limited in this application. The reconfiguration message may be, for example, an RRC reconfiguration message or an RRC connection reconfiguration message.

Optionally, the first message may include a handover command. The handover command is used to indicate or configure the terminal device to hand over from the source network device to the target network device. The handover command may also be understood as information that is sent by the source network device and that indicates the terminal device to perform handover. The handover command may also be referred to as a handover indication or handover command information, or may have another name. This is not limited in this application. Further, the handover command may be specifically a DAPS handover command, that is, information that indicates the terminal device to perform DAPS handover.

Step S202: After receiving the first message, the terminal device maintains data transmission with the source network device.

That the terminal device maintains data transmission with the source network device means that the terminal device maintains a protocol stack corresponding to the source network device, and does not perform layer 2 resumption or reestablishment on a protocol stack corresponding to the source side. The protocol stack includes a control plane protocol stack and/or a user plane protocol stack. In this way, in a downlink direction, the terminal device may continue to receive data from the source network device, and in an uplink direction, the terminal device may continue to send data to the source network device.

As described above, this embodiment of this application may be applied to a DAPS handover scenario. In this case, after receiving the first message from the source network device, the terminal device may further establish a protocol stack corresponding to the target network device while maintaining the protocol stack corresponding to the source network device, and perform a random access RACH procedure, to access the target network device. It should be understood that the random access procedure may succeed or fail. This is not limited in this application. In other words, the method provided in this embodiment of this application is applicable to both a scenario in which the terminal device successfully accesses the target network device and a scenario in which the terminal device fails to access the target network device. That the terminal device fails to access the target network device may include: After the terminal device maintains a connection to the target network device for a short period of time, the connection between the terminal device and the target network device fails again, or access fails, that is, the terminal device fails to establish a connection to the target network device. That access fails may mean: A random access procedure fails, or the terminal device fails to send a reconfiguration complete message to the target network device.

If access succeeds, the terminal device may further receive a first release message from the target network device, where the first release message indicates the terminal device to release a connection between the terminal device and the source network device.

Step S203: The terminal device detects that the connection between the terminal device and the source network device fails.

In this embodiment of this application, the connection between the terminal device and the source network device may fail before the terminal device accesses the target network device, or after the terminal device accesses the target network device. In this case, before accessing the target network device, the terminal device may detect that the connection between the terminal device and the source network device fails. For example, before performing a random access procedure to the target network device, the terminal device detects that the connection between the terminal device and the source network device fails. Alternatively, after accessing the target network device, the terminal device may detect that the connection between the terminal device and the source network device fails. For example, after a random access procedure succeeds, before or after sending a handover complete message to the target network device, the terminal device detects that the connection between the terminal device and the source network device fails. Optionally, after the random access procedure succeeds, after sending a handover complete message to the target network device, the terminal device may detect that the connection between the terminal device and the source network device fails. Alternatively, after sending a handover complete message to the target network device and before receiving the first release message sent by the target network device, the terminal device may detect that the connection between the terminal device and the source network device fails.

It may be understood that if the connection between the terminal device and the source network device fails before the terminal device accesses the target network device, after detecting that the connection between the terminal device and the source network device fails, the terminal device does not reestablish a user plane protocol stack on the source side, but continues to perform a random access procedure to the target network device.

Step S204: The terminal device sends a first report to a third network device, where the first report includes first indication information and/or at least one piece of time period information.

The first indication information is used to determine whether the connection between the terminal device and the source network device fails before the terminal device accesses the target network device. In a possible implementation, the first indication information may indicate whether the connection between the terminal device and the source network device fails before the terminal device accesses the target network device, that is, clearly indicate whether the connection between the terminal device and the source network device fails before or after the terminal device accesses the target network device. For example, the first indication information may be one bit, and the bit may be set to 0 or 1. When the bit is set to 0, it may indicate that the connection between the terminal device and the source network device fails before the terminal device accesses the target network device. When the bit is set to 1, it may indicate that the connection between the terminal device and the source network device fails after the terminal device accesses the target network device.

In another possible implementation, the first indication information may explicitly indicate that the connection between the terminal device and the source network device fails before the terminal device accesses the target network device, or explicitly indicate that the connection between the terminal device and the source network device fails after the terminal device accesses the target network device. For example, the first indication information may be a preset flag. When the first report includes the flag, it may indicate that the connection between the terminal device and the source network device fails before the terminal device accesses the target network device. When the first report does not include the flag, it may indicate that the connection between the terminal device and the source network device fails after the terminal device accesses the target network device. Alternatively, on the contrary, when the first report does not include the flag, it may indicate that the connection between the terminal device and the source network device fails before the terminal device accesses the target network device. When the first report includes the flag, it may indicate that the connection between the terminal device and the source network device fails after the terminal device accesses the target network device.

It should be noted that, in this embodiment of this application, the first report does not necessarily include the first indication information, and the first indication information may alternatively be optional information in the first report. Similarly, the at least one piece of time period information may alternatively be optional information in the first report. If the first report does not include the first indication information, but includes at least one piece of time period information, the network device may still determine, based on the at least one piece of time period information in the first report, whether the connection between the terminal device and the source network device fails before or after the terminal device accesses the target network device, because division of time periods varies in different scenarios.

In this embodiment of this application, time period information included in the first report is related to time at which the terminal device detects that the connection between the terminal device and the source network device fails, namely, the terminal device detects that the connection between the terminal device and the source network device fails before accessing the target network device or after accessing the target network device.

If the terminal device detects, before accessing the target network device, that the connection between the terminal device and the source network device fails, the at least one piece of time period information in the first report may include one or more of the following time period information: first time period information, second time period information, third time period information, and fourth time period information.

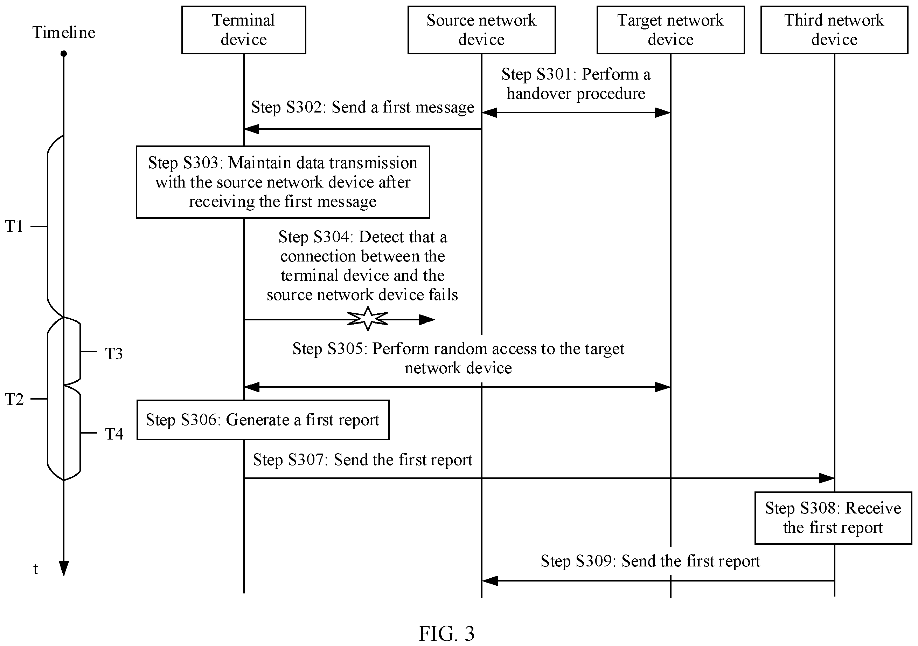

Division of the foregoing time periods may be as shown in FIG. 3. The first time period information indicates a time period from a time point of receiving the first message by the terminal device to a time point of detecting, by the terminal device, that the connection between the terminal device and the source network device fails. The time period may correspond to a time period T1 in FIG. 3.

The second time period information indicates a time period from a time point of detecting, by the terminal device, that the connection between the terminal device and the source network device fails to a time point of sending the first report by the terminal device. The time period may correspond to a time period T2 in FIG. 3.

The third time period information indicates a time period from a time point of detecting, by the terminal device, that the connection between the terminal device and the source network device fails to a time point of accessing the target network device by the terminal device. The time period may correspond to a time period T3 in FIG. 3. Optionally, the accessing the target network device may be: initiating, by the terminal device, a random access procedure to the target network device, or sending, by the terminal device, a reconfiguration complete message to the target network device.

The fourth time period information indicates a time period from a time point of accessing the target network device by the terminal device to a time point of sending the first report by the terminal device. The time period may correspond to a time period T4 in FIG. 3.

Optionally, in the example shown in FIG. 3, the source network device may perform a handover procedure with the target network device in step S301. The procedure includes: For the terminal device, the source network device determines to perform DAPS handover to the target network device; the source network device sends a handover request message to the target network device, and the target network device performs access control after receiving the handover request message; and if allowing access of the terminal device, the target network device sends a handover notification message to the source network device. The handover notification message indicates that the source network device allows the terminal device to perform handover. In this way, after receiving the handover notification message, the source network device may send the first message to the terminal device in step S302, to indicate the terminal device to perform handover.

In step S303, after receiving the first message, the terminal device may maintain data transmission with the source network device. In step S304, the terminal device detects that the connection between the terminal device and the source network device fails. In step S305, the terminal device performs a random access procedure to the target network device, to access the target network device. It should be noted that herein, step S304 is performed before step S305, and this indicates that before accessing the target network device, the terminal device detects that the connection between the terminal device and the source network device fails. Then, in step S306, the terminal device may record various parameters in the handover process, for example, the first indication information and/or the at least one piece of time period information mentioned above, or other information, to generate the first report. Then, in step S307, the terminal device sends the generated first report to the third network device. In step S308, the third network device may receive the first report from the terminal device. Optionally, the third network device may further send the first report to a network device that requires the first report, for example, the source network device. In another implementation, the terminal device may alternatively perform step S306 after step S304, and then perform step S305, step S307, and step S308. To be specific, after detecting that the connection between the terminal device and the source network device fails, the terminal device records various parameters in the handover process.

It may be understood that step S301 to step S309 shown in FIG. 3 are a specific implementation of the steps shown in FIG. 2, or may be understood as refinement or extension of the steps shown in FIG. 2. Step S302 may correspond to step S201, step S303 may correspond to step S202, step S304 may correspond to step S203, step S307 may correspond to step S204, step S308 may correspond to step S205, and step S309 may correspond to step S206.

It can be learned from FIG. 3 that, in this embodiment of this application, time periods may be obtained through division based on time points of key events in the handover process, and some time periods overlap other time periods, or include other time periods, or are included in other time periods. For example, a time period (that is, the time period T2) indicated by the second time period information includes a time period (that is, the time period T3) indicated by the third time period information and a time period (that is, the time period T4) indicated by the fourth time period information. In this case, based on any two of the time periods T2, T3, and T4, information about the other time period may be learned of.

It may be understood that the time points of the key events in the handover process may further include a time point at which at least one of the following key events occurs: a handover configuration-related message is received, a trigger condition of conditional handover is met, the failure of the connection between the terminal device and the source network device is detected, the target network device is accessed, the failure of the connection between the terminal device and the target network device is detected, the first release message from the target network device is received, and the first report is sent to the network device.

In view of this, in a possible implementation, the at least one piece of time period information in the first report may alternatively include the first time period information and the second time period information. This implementation may also be understood as dividing time periods based on a time point at which the connection between the terminal device and the source network device fails. Alternatively, in another possible implementation, the at least one piece of time period information in the first report may include the first time period information, the third time period information, and the fourth time period information. This implementation may also be understood as dividing time periods based on a key event in the handover process of the terminal device. The key event is: for example, the connection to the source network device fails or random access to the target network device succeeds.

If the terminal device detects, after accessing the target network device, that the connection between the terminal device and the source network device fails, the first report may include one or more of the following time period information: first time period information, second time period information, fourth time period information, fifth time period information, and sixth time period information.

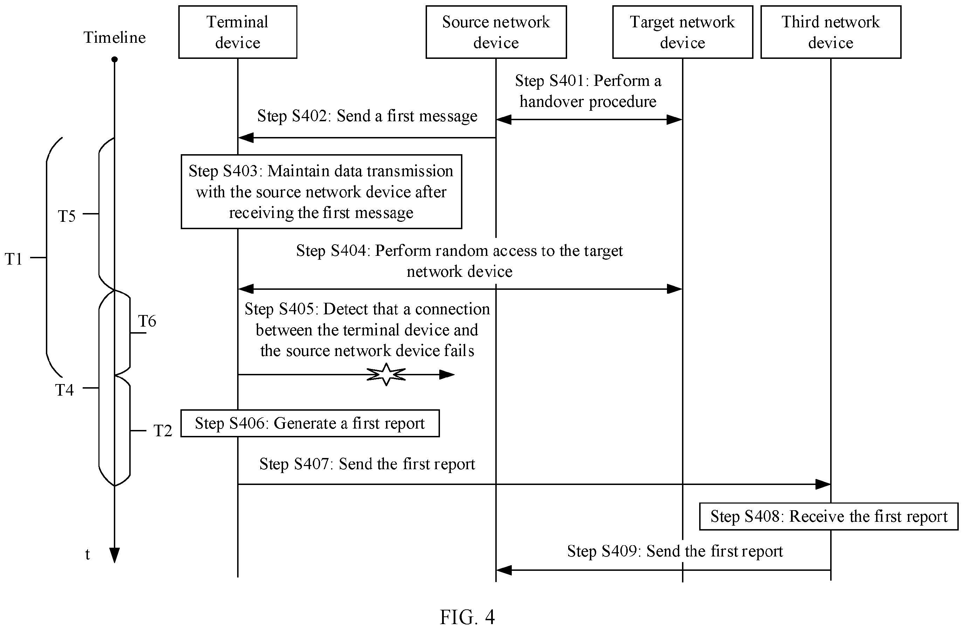

Division of the foregoing time periods may be as shown in FIG. 4. For descriptions of the first time period information, the second time period information, and the fourth time period information, refer to the detailed descriptions in the foregoing embodiment. Details are not described herein again. A first time period, a second time period, and a fourth time period may respectively correspond to the time periods T1, T2, and T4 shown in FIG. 4.

The fifth time period information indicates a time period from a time point of receiving the first message by the terminal device to a time point of accessing the target network device by the terminal device. The time period may correspond to a time period T5 shown in FIG. 4.

The sixth time period information indicates a time period from a time point of accessing the target network device by the terminal device to a time point of detecting, by the terminal device, that the connection between the terminal device and the source network device fails. The time period may correspond to a time period T6 shown in FIG. 4.

Optionally, in the example shown in FIG. 4, for a specific implementation of step S401 to step S409, refer to the descriptions of the corresponding steps in FIG. 3. However, it should be noted that step S404 corresponds to step S305 in FIG. 3, and step S405 corresponds to step S304 in FIG. 3. In other words, in the example shown in FIG. 4, the terminal device first performs a random access procedure to the target network device, accesses the target network device, and then detects that the connection between the terminal device and the source network device fails. In other words, step S404 is performed before step S405. This is different from an execution sequence of step S304 and step S305 in FIG. 3. Similarly, step S401 to step S409 shown in FIG. 4 are another specific implementation of the steps shown in FIG. 2, or may be understood as another refinement or extension of the steps shown in FIG. 2.

It should be noted that, in this embodiment of this application, in still another possible implementation, each piece of time period information may include at least one type of information such as a start time point, an end time point, and duration of the indicated time period.

This embodiment of this application may be further applied to a scenario in which DAPS handover and conditional handover are combined. In this case, the terminal device may receive conditional handover configuration information from the source network device, and the conditional handover configuration information includes a trigger condition of the conditional handover and at least one candidate target network device. If the trigger condition is met, the terminal device may determine one target network device in the at least one candidate target network device, and then perform a random access procedure to the target network device.

It should be noted that in a scenario relating to the conditional handover, after the terminal device receives the conditional handover configuration information from the source network device, the terminal device hands over to the target network device after the trigger condition of the conditional handover is met.

The conditional handover configuration information may be sent by using the first message in step S201, or may be sent by using another message. This is not limited in this application. To be specific, the conditional handover configuration information and the DAPS handover command may be sent in a same message, or may be sent in different messages.

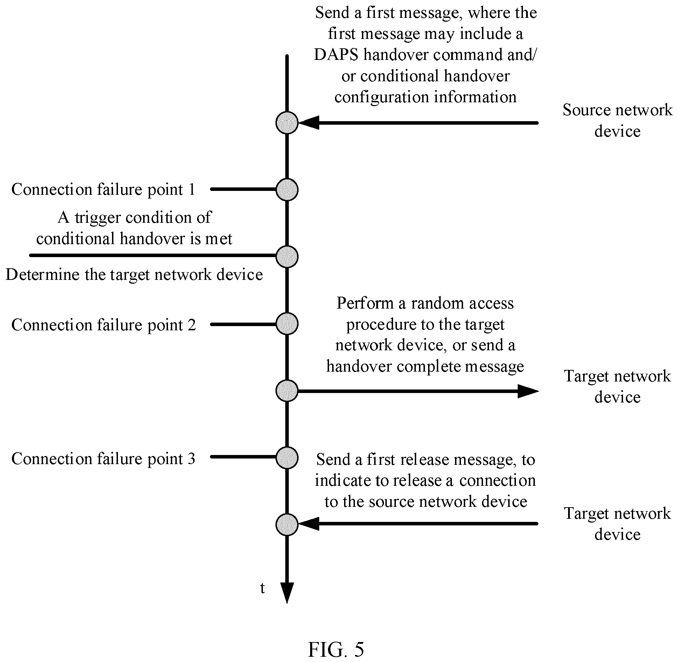

It may be understood that, in the scenario in which the DAPS handover and the conditional handover are combined, the connection between the terminal device and the source network device may fail before the trigger condition of the conditional handover is met, or may fail after the trigger condition of the conditional handover is met. In this case, as shown in FIG. 5, the connection between the terminal device and the source network device may fail at one of three possible connection failure points shown in FIG. 5. The first connection failure point indicates that the connection between the terminal device and the source network device fails before the trigger condition of the conditional handover is met, and certainly before the terminal device accesses the target network device. The second connection failure point indicates that the connection between the terminal device and the source network device fails after the trigger condition of the conditional handover is met, but before the terminal device accesses the target network device. The third connection failure point indicates that the connection between the terminal device and the source network device fails after the terminal device accesses the target network device, and certainly after the trigger condition of the conditional handover is met.

Correspondingly, the first report may further include second indication information. The second indication information indicates that before the trigger condition is met, the terminal device detects that the connection between the terminal device and the source network device fails. Alternatively, the second indication information may indicate that after the trigger condition is met and before the terminal device accesses the target network device, the terminal device detects that the connection between the terminal device and the source network device fails. Alternatively, the second indication information may indicate that after the trigger condition is met and the terminal device accesses the target network device, the terminal device detects that the connection between the terminal device and the source network device fails. A specific representation form of the second indication information is not limited in this embodiment of this application.

Optionally, the first report may include information about the source network device and/or the target network device. For example, the first report may include one or more of the following information: cell information of the source network device and/or the target network device, and cell quality information corresponding to the source network device and/or the target network device at at least one time point. In this case, the network device can determine, based on the cell information and the cell quality information in the first report, whether the handover parameter is properly configured.

The cell information of the source network device may be information about a source cell, and the cell information of the target network device may be information about a target cell. The cell information may include at least one of a cell global identifier (cell global identifier, CGI) of a cell, a physical cell identifier (physical cell identifier, PCI) and a frequency, a cell identifier (cell identifier), or a tracking area code (tracking area code, TAC).

The cell quality information may include, for example, at least one of received signal code power (received signal code power, RSCP), reference signal received power (reference signal received power, RSRP), reference signal received quality (reference signal received quality, RSRQ), a signal-to-noise ratio (signal-to-noise ratio, SNR), a signal to interference plus noise ratio (signal to interference plus noise ratio, SINR), a reference signal strength indicator (reference signal strength indication, RSSI), or other signal quality. Cell quality may be of at least one of a cell level, a beam level, a synchronization signal/physical broadcast channel block level, a channel state information reference signal (channel state information reference signal, CSI-RS) level, an air interface technology (numerology) level, a slice (slicing) level, or a bandwidth part (bandwidth part, BWP) level. The cell quality may be obtained by measuring at least one of a downlink synchronization channel, a channel state information reference signal, a demodulation reference signal (demodulation reference signal, DMRS), a cell-specific reference signal (cell-specific reference signal, CRS) signal, a synchronization signal (synchronization signal, SS), a synchronization signal/physical broadcast channel block (synchronization signal/physical broadcast channel block, SS/PBCH Block), or another downlink signal. It may be understood that if the cell quality information is of the beam level, the synchronization signal/physical broadcast channel block level, the channel state information reference signal level, the air interface technology level, the slice level, or the bandwidth part level, the cell information may further include at least one of identification information of a corresponding beam, a synchronization signal/physical broadcast channel block, a channel state information reference signal, an air interface technology, a slice, or a bandwidth part.

The at least one time point may be one or more of: a time point of receiving the first message by the terminal device, a time point of detecting, by the terminal device, that the connection between the terminal device and the source network device fails, a time point of accessing the target network device by the terminal device, a time point at which the trigger condition of the conditional handover is met, and a time point of sending the first report by the terminal device. It should be noted that the time point of accessing the terminal device by the target network device may include a time point at which a random access procedure succeeds, or a time point at which the terminal device sends a handover complete message to the target network device.

Optionally, the first report may further include handover type information, and the handover type information indicates any handover type of common handover, dual active protocol stack DAPS handover, the conditional handover, or a combination of the DAPS handover and the conditional handover. In this case, the network device can further identify, based on the handover type information, a handover parameter to be adjusted.

Optionally, the first report may further include random access information of the terminal device on the target network device. The random access information may include at least one of the following information: a quantity of times that the terminal device sends a preamble, whether a maximum quantity of preamble sending times is reached, whether a transmit power of the terminal device reaches a maximum value or a difference between the transmit power of the terminal device and the maximum value is less than or equal to a threshold when the terminal device sends a preamble the last time, whether a conflict is detected, whether cell or beam quality is higher than a threshold, whether a two-step random access procedure is rolled back to a four-step random access procedure, and uplink carrier information. It may be understood that, for the four-step random access procedure, the preamble may be a message 1 (msg1), and for the two-step random access procedure, the preamble may be a message A (msgA). Uplink carrier information indicates an uplink carrier corresponding to the random access information. For example, the uplink carrier information may indicate whether a corresponding uplink carrier is an NR UL carrier or a supplementary uplink carrier. Alternatively, the uplink carrier information may be used by the network device to determine frequency information of the uplink carrier. The random access information may be at least one of a cell level, a beam level, a synchronization signal/physical broadcast channel block level, a channel state information reference signal level, an air interface technology level, a slice level, or a bandwidth part level. It may be understood that the random access information may further include at least one of identification information of a corresponding beam, a synchronization signal/physical broadcast channel block, a channel state information-reference signal, an air interface technology, a slice, or a bandwidth part.

Optionally, the first report may further include sixth indication information, and the sixth indication information indicates whether the connection between the terminal device and the source network device fails when the terminal device receives the first release message from the target network device. The first release message indicates the terminal device to release the connection between the terminal device and the source network device. Alternatively, the sixth indication information may be understood as follows: The sixth indication information indicates that the connection between the terminal device and the source network device fails before the terminal device receives the first release message from the target network device, or indicates that the connection between the terminal device and the source network device does not fail before the terminal device receives the first release message from the target network device.

It may be understood that, in this embodiment of this application, before performing step S204, the terminal device may generate the first report based on one or more types of information in a handover process from the source network device to the target network device. The first report may be at least one of a radio link failure RLF report, an establishment failure report, a resumption failure report, or a handover success report.

Step S205: The third network device receives the first report from the terminal device.

Optionally, after the third network device receives the first report, further, the first report may be transmitted between a CU node and a DU node, may be transmitted between network devices, or may be transmitted between a network device and a core network device. This is not limited in this application.

In a possible implementation, if the third network device is in a split form including a CU node and a DU node, the CU node in the third network device may receive the first report from the terminal device. Optionally, the CU node may further send some or all information included in the first report to the DU node. Optionally, if the CU node may be divided into a control plane (CU-CP) and a user plane (CU-UP), the CU-CP node may send some or all information included in the first report to the CU-UP node.

In another possible implementation, the third network device may send the first report to another network device that requires the first report. For example, in the following step S206, the third network device may send the first report to the source network device and/or the target network device.

Step S206: The third network device sends the first report to the source network device and/or the target network device.

For example, the third network device sends the first report to the source network device. The third network device may send some or all information included in the first report to the source network device. Optionally, the third network device may further send type information of the first report to the source network device. For example, if there is an interface that can be used for direct communication between the third network device and the source network device, the third network device may send some or all information of the first report to the source network device through the interface between the base stations. The interface between the third network device and the source network device may be an X2 interface or an Xn interface. Optionally, the third network device may send some or all information of the first report to the source network device by using a failure indication (FAILURE INDICATION, RLF INDICATION) message, a handover report (HANDOVER REPORT) message, or another message.

If the third network device cannot directly communicate with the source network device, the third network device may send some or all information of the first report to the source network device by using a core network device. Optionally, the third network device may further send type information of the first report to the source network device. For example, the third network device may send some or all information of the first report to the core network device through an interface between a base station and the core network device. Specifically, the third network device sends some or all information of the first report to the core network device through an S 1 or NG interface, and the core network device forwards, to the source network device, the information received from the third network device. Specifically, the third network device may send some or all information of the first report to the source network device by using the following messages on the S1/NG interface: an uplink RAN configuration transfer (UPLINK RAN CONFIGURATION TRANSFER) message, a downlink RAN configuration transfer (DOWNLINK RAN CONFIGURATION TRANSFER) message, a base station configuration transfer (eNB CONFIGURATION TRANSFER) message, a core network device configuration transfer (MME CONFIGURATION TRANSFER) message, or another message.

It may be understood that an implementation in which the third network device sends the first report to the source network device is applicable to the step of sending the first report between any two network devices in this embodiment of this application. For an implementation of a network device that sends the first report, refer to the foregoing descriptions of the third network device. For an implementation of a network device that receives the first report, refer to the foregoing descriptions of the source network device.

Optionally, for example, the third network device sends the first report to the target network device. The third network device may send some or all information included in the first report to the target network device in the foregoing manner. Optionally, further, the target network device may send some or all information included in the first report to the source network device in the foregoing manner.

Optionally, if the source network device or the target network device is in a split form including a CU node and a DU node, the CU node in the source network device or the target network device may receive the first report from the terminal device. Optionally, the CU node may further send some or all information included in the first report to the DU node. Optionally, if the CU node may be divided into a control plane (CU-CP) and a user plane (CU-UP), the CU-CP node may send some or all information included in the first report to the CU-UP node.

Optionally, when sending some or all information of the first report to the source network device, the third network device or the target network device may further send handover type information to the source network device. The handover type information indicates a mobility type used by the terminal device when a connection of the terminal device fails. The handover type information may be any one of delayed DAPS handover (handover, HO), premature DAPS HO, DAPS HO to a wrong cell, delayed DAPS CHO, premature DAPS CHO, and DAPS CHO to a wrong cell.

It may be understood that the source network device, the target network device, and the third network device may be network devices of a same system, different systems, a same standard, different standards, or a same system but different standards. It may be understood that corresponding handover type information may further indicate system and/or standard information. In an example, the handover type information may be inter-RAT premature DAPS.

It may be understood that, if the report recorded by the terminal device is a first report of a first system or a first standard, when the terminal device sends the first report by using a second network device of a second system or a second standard, the first report may be sent to the second network device of the second system or the second standard in a form of a container. Optionally, the terminal device may include, outside the container, cell information corresponding to the report, so that the second network device determines, based on the cell information, the target network device to which the report is forwarded. For descriptions of the cell information, refer to the descriptions in other embodiments of this application. Details are not described herein again. It may be understood that the cell information may be information about a source cell or information about a target cell. For example, if the connection between the terminal device and the source network device fails before the terminal device accesses the target network device, the cell information may be the information about the source cell. Correspondingly, the third network device may determine, based on the information about the source cell, to send the first report to the source network device.

Optionally, in this embodiment of this application, the terminal device may further receive third indication information from the source network device, where the third indication information indicates whether the first report shall be recorded. The source network device may send the third indication information to the terminal device before sending the first message, or may send the third indication information while sending the first message. For example, the source network device includes the third indication information in the first message and send the first message to the terminal device. Optionally, before the source network device sends the third indication information to the terminal device, the source network device may receive capability information of the terminal device. The capability information indicates that the terminal device supports recording the first report in a DAPS scenario or in a DAPS and CHO scenario. The source network device may receive the capability information sent by the terminal device, another network device, or a core network device.

The third indication information may have a plurality of possible implementations. For example, the third indication information may indicate whether the first report shall be recorded when the connection between the terminal device and the source network device fails before the terminal device accesses the target network device; the third indication information may indicate whether the first report shall be recorded when the connection between the terminal device and the source network device fails after the terminal device accesses the target network device; the third indication information may indicate whether the first report shall be recorded when the connection between the terminal device and the source network device does not fail when the terminal device receives the first release message from the target network device; the third indication information may further indicate whether the first report shall be recorded when the handover type is the combination of the DAPS handover and the conditional handover; or the third indication information may further indicate whether the first report shall be recorded when the connection between the terminal device and the source network device fails before a first time point when the handover type is the DAPS handover. The first time point may be a specific time point or time period notified by the source network device.

It can be learned that according to the MRO mechanism provided in this embodiment of this application, the terminal device can record information about a failure of a connection between the terminal device and the source network device in the DAPS handover scenario, and send the information to the network device. In this case, the network device can determine whether a DAPS handover indication is delayed to be sent and whether a DAPS handover-related mobility parameter easily causes a potential DAPS handover command sending failure, so that a corresponding mobility parameter configuration of DAPS handover is adjusted, and a subsequent handover success rate is improved. In addition, the first report provided in this embodiment of this application may include a plurality of types of information elements, so that information about a failure of a connection between the terminal device and the source network device in the DAPS handover scenario is recorded, thereby improving applicability of the method.

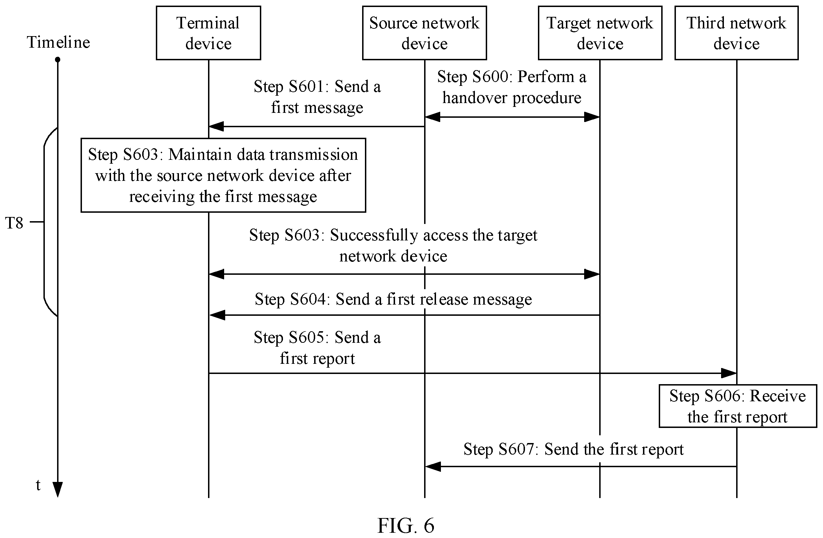

FIG. 6 is a schematic flowchart of another communication method according to an embodiment of this application. The method includes the following steps.

Step S601: A terminal device receives a first message from a source network device, where the first message is used to enable the terminal device to hand over from the source network device to a target network device.

Step S602: The terminal device maintains data transmission with the source network device.

Step S603: The terminal device successfully accesses the target network device.

That the terminal device can access the target network device may include: A random access procedure between the terminal device and the target network device succeeds, or the terminal device sends a handover complete message to the target network device.

Step S604: The terminal device receives a first release message from the target network device, where the first release message indicates the terminal device to release a connection between the terminal device and the source network device.

Step S605: The terminal device sends a first report to a third network device, where the first report includes fourth indication information and/or eighth time period information.

The fourth indication information is used to determine whether the connection between the terminal device and the source network device fails.

The eighth time period information indicates a time period from a time point of receiving the first message by the terminal device to a time point of receiving the first release message by the terminal device from the target network device. The time period corresponds to a time period T8 shown in FIG. 6.

Step S606: The third network device receives the first report from the terminal device.

Step S607: The third network device sends the first report to the source network device and/or the target network device.

Optionally, the method may further include step S600. To be specific, the source network device and the target network device perform a handover procedure.

A specific implementation of the foregoing step S600 to step S607 is similar to that of the foregoing step S201 to step S206, and repeated parts are not described herein again.

It should be noted that, in this embodiment of this application, the connection between the terminal device and the source network device does not fail, and after the terminal device receives the first message, a random access procedurebetween the terminal device and the target network device succeeds. In other words, the terminal device successfully establishes a connection to the target network device, and the connection to the target network device does not fail. In view of this, the first report provided in this embodiment of this application may also be referred to as a handover success report.

Optionally, the foregoing method may be applied to a DAPS handover scenario, or a scenario in which DAPS handover and conditional handover are combined. To be specific, the terminal device may receive conditional handover configuration information from the source network device, where the conditional handover configuration information includes a trigger condition of conditional handover and at least one candidate target network device. If the trigger condition is met, the terminal device may determine one target network device in the at least one candidate target network device, and then perform a random access procedure to the target network device.

Optionally, the first report may further include information about the source network device and/or the target network device. For example, the first report may include one or more of the following information: cell information of the source network device and/or the target network device, and cell quality information corresponding to the source network device and/or the target network device at at least one time point. In this case, the network device can determine, based on the cell information and the cell quality information in the first report, whether the handover parameter is proper.

For a specific implementation of this part, refer to the foregoing descriptions. Details are not described herein again. However, it should be noted that the at least one time point may include one or more of the following time points: a time point of receiving the first message by the terminal device, a time point of successfully accessing the target network device by the terminal device, a time point of receiving the first release message by the terminal device from the target network device, a time point at which the trigger condition of the conditional handover is met (that is, a time point at which the conditional handover is triggered), and a time point of sending the first report by the terminal device.

Optionally, the first report may further include random access information of the terminal device on the target network device. For specific descriptions of the random access information, refer to the foregoing descriptions. Details are not described herein again. In this case, the target network device can determine, based on the random access information in the first report, whether the random access parameter is proper.

Optionally, the first report may further include handover type information, and the handover type information indicates any handover type of common handover, dual active protocol stack DAPS handover, the conditional handover, or a combination of the DAPS handover and the conditional handover. The network device can further identify, based on the handover type information, a handover parameter to be adjusted.

Optionally, the terminal device may further receive third indication information from the source network device, where the third indication information indicates whether the first report shall be recorded. For a specific implementation of the third indication information, refer to the foregoing descriptions. Details are not described herein again.

It can be learned that, according to the foregoing technical solution, when the connection between the terminal device and the source network device does not fail, and the terminal device successfully accesses the target network device, the terminal device may record various information in the handover process (for example, the fourth indication information, the eighth time period information, or quality information of a source cell and a target cell at key time points in the handover process), generate the first report, and send (directly send or indirectly send) the first report to the source network device. In this way, the source network device can determine whether there is a possible handover scenario, and a handover parameter can be more properly configured.

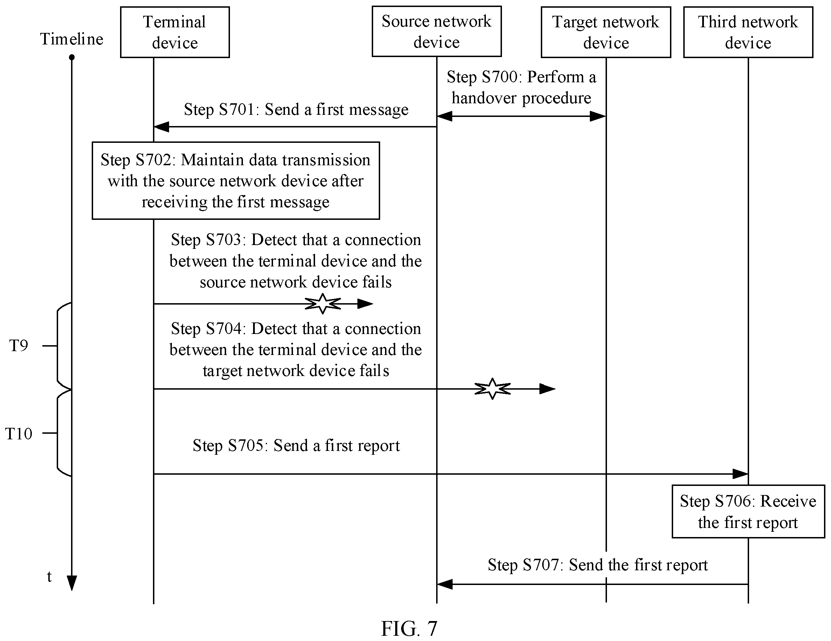

FIG. 7 is a schematic flowchart of a communication method according to an embodiment of this application. The method includes the following steps.

Step S701: A terminal device receives a first message from a source network device, where the first message is used to enable the terminal device to hand over from the source network device to a target network device.

Step S702: The terminal device maintains data transmission with the source network device.

Optionally, step S703: The terminal device detects that a connection between the terminal device and the source network device fails.

Step S704: The terminal device detects that a connection between the terminal device and the target network device fails.

That the connection between the terminal device and the target network device fails may include: After the terminal device successfully establishes a connection to the target network device, the connection between the terminal device and the target network device fails within a short period of time or fails soon. Alternatively, that the connection between the terminal device and the target network device fails may include: Access fails, that is, the terminal device fails to establish a connection to the target network device. That access fails may mean: A random access procedure fails, or the terminal device fails to send a reconfiguration complete message to the target network device.

It should be noted that a sequence of detecting, by the terminal device, that the connection between the terminal device and the source network device fails and detecting that the connection between the terminal device and the target network device fails is not limited in this embodiment of this application. In other words, step S704 may be performed after step S703, or may be performed before step S703.

In a possible manner, S704 is performed after S703. To be specific, when the connection between the terminal device and the target network device fails, an RLF already occurs on the source network device. In this case, the terminal device initiates an RRC reestablishment procedure.

In another possible manner, S704 is performed before S703. For example, the following four scenarios may be included.

Scenario 1: The terminal device fails to access the target network device. For example, a random access procedure between the terminal device and the target cell fails. In this case, if the terminal device detects that a cell of the source network device is unavailable, for example, an RLF occurs on a link between the terminal device and the source network device, the terminal device performs an RRC reestablishment procedure.

Scenario 2: The terminal device fails to access the target network device. For example, a random access procedure between the terminal device and a target cell fails. In this case, if the terminal device detects that a cell of the source network device is available, for example, no RLF occurs on a link between the terminal device and the source network device, the terminal device may resume the connection between the terminal device and the source network device. In an example, the connection between the terminal device and the source network device is successfully resumed. For example, the terminal device may send information to the source network device to indicate that the terminal fails to access the target network device, and then the terminal device communicates with the source network device.

Scenario 3: The terminal device fails to access the target network device. For example, a random access procedure between the terminal device and a target cell fails. In this case, if the terminal device detects that a cell of the source network device is available, for example, no RLF occurs on a link between the terminal device and the source network device, the terminal device may resume the connection between the terminal device and the source network device. In an example, the connection between the terminal device and the source network device fails to be resumed. For example, the terminal device cannot resume use of a DRB configuration and/or an SRB configuration on the source network device side, or the terminal device cannot send information to the source network device to indicate that the terminal fails to access the target network device. In this case, the terminal device performs an RRC reestablishment procedure.

Scenario 4: The terminal device fails to access the target network device. For example, a random access procedure between the terminal device and a target cell fails. In this case, if the terminal device detects that a cell of the source network device is available, for example, no RLF occurs on a link between the terminal device and the source network device, the terminal device may resume the connection between the terminal device and the source network device. In an example, after the connection between the terminal device and the source network device is successfully resumed, after a period of time, if the terminal device detects that the connection between the terminal device and the source network device fails, for example, the terminal device detects that the connection between the terminal device and the source network device fails, for example, an RLF occurs, the terminal device performs a reestablishment procedure.

Step S705: The terminal device sends a first report to a third network device.

The first report may include one or more of the following information: fifth indication information, third time period information, fifth time period information, ninth time period information, tenth time period information, eleventh time period information, twelfth time period information, and seventh indication information.

The fifth indication information is used to determine whether both the connection between the terminal device and the source network device and the connection between the terminal device and the target network device fail.

It may be understood that, in different cases, information included in the first report may be different, and a function or content of the seventh indication information may also be different.

For example, in the foregoing scenario 1, the first report includes one or more of the following information: fifth indication information, tenth time period information, seventh indication information, and a time period from a time point of detecting, by the terminal device, that the connection between the terminal device and the target network device fails to a time point of initiating an RRC reestablishment procedure by the terminal device. The seventh indication information indicates that the connection between the terminal device and the source network device fails to be resumed. In the foregoing scenario 2, the first report includes one or more of the following information: fifth indication information, tenth time period information, seventh indication information, and a time period from a time point of detecting, by the terminal device, that the connection between the terminal device and the target network device fails to a time point of successfully resuming the connection between the terminal device and the source network device. The seventh indication information indicates that the connection between the terminal device and the source network device is successfully resumed.

In the foregoing scenario 3, the first report includes one or more of the following information: fifth indication information, tenth time period information, seventh indication information, and eleventh time period information. The seventh indication information indicates that the connection between the terminal device and the source network device fails to be resumed.

In the foregoing scenario 4, the first report includes one or more of the following information: fifth indication information, tenth time period information, eleventh time period information, twelfth time period information, and seventh indication information. The seventh indication information indicates that a connection failure, for example, an RLF, occurs on the source network device after the connection between the terminal device and the source network device is successfully resumed. The twelfth time period information indicates a time period from a time point of detecting, by the terminal device, that the connection between the terminal device and the source network device fails to a time point of sending the first report by the terminal device.

For example, before the terminal device detects that the connection between the terminal device and the target network device fails, the terminal device detects that the connection between the terminal device and the source network device fails. That is, S704 is performed after S703. The ninth time period information indicates a time period from a time point of detecting, by the terminal device, that the connection between the terminal device and the source network device fails to a time point of detecting, by the terminal device, that the connection between the terminal device and the target network device fails. The time period may correspond to a time period T9 shown in FIG. 7. In this scenario, in addition to the ninth time period information, the first report may further include one or more of the following information: fifth indication information, tenth time period information, and seventh indication information. The seventh indication information indicates that the connection between the terminal device and the source network device fails to be resumed, or indicates that the terminal device does not resume the connection between the terminal device and the source network device. Third time period information, where the third time period information indicates a time period from a time point of detecting, by the terminal device, that the connection between the terminal device and the source network device fails to a time point of accessing the target network device by the terminal device. The ninth time period information indicates a time period from a time point of accessing the target network device by the terminal device to a time point of detecting, by the terminal device, that the connection between the terminal device and the target network device fails.

The tenth time period information indicates a time period from a time point of detecting, by the terminal device, that the connection between the terminal device and the target network device fails to a time point of sending the first report by the terminal device. The time period may correspond to a time period T10 in FIG. 7.

For example, after the terminal device detects that the connection between the terminal device and the target network device fails, the terminal device detects that the connection between the terminal device and the source network device fails. The eleventh time period information indicates a time period from a time point of detecting, by the terminal device, that the connection between the terminal device and the target network device fails to a time point of detecting, by the terminal device, that the connection between the terminal device and the source network device fails. Fifth time period information, where the fifth time period information indicates a time period from a time point of receiving the first message by the terminal device to a time point of accessing the target network device by the terminal device. The eleventh time period information indicates a time period from a time point of accessing the target network device by the terminal device to a time point of detecting, by the terminal device, that the connection between the terminal device and the target network device fails.

For example, a scenario of "after the terminal device detects that the connection between the terminal device and the target network device fails, the terminal device detects that the connection between the terminal device and the source network device fails" may be as follows: After the terminal device detects that the connection between the terminal device and the target network device fails, for example, access fails, the terminal device attempts to resume the connection between the terminal device and the source network device. In this scenario, "the terminal device detects that the connection between the terminal device and the source network device fails" may be: The connection between the terminal device and the source network device fails to be resumed, or after the connection between the terminal device is successfully resumed, the terminal device detects that the connection between the terminal device and the source network device fails. For example, the terminal device detects that a failure, for example, an RLF, occurs on the connection between the terminal device and the source network device.

Step S706: The third network device receives the first report from the terminal device.

Step S707: The third network device sends the first report to the source network device and/or the target network device.

Optionally, the method may further include step S700. To be specific, the source network device and the target network device perform a handover procedure.

A specific implementation of the foregoing step S700 to step S707 is similar to that of the foregoing step S201 to step S206, and repeated parts are not described herein again.

It should be noted that, in this embodiment of this application, the connection between the terminal device and the source network device fails, and after the terminal device successfully establishes a connection to the target network device, the connection fails within a short period of time or fails soon, or in other words, the terminal device fails to establish a connection to the target network device. In view of this, the first report provided in this embodiment of this application may also be referred to as a handover failure report.

Optionally, the foregoing method may be applied to a DAPS handover scenario, or a scenario in which DAPS handover and conditional handover are combined. To be specific, the terminal device may receive conditional handover configuration information from the source network device, where the conditional handover configuration information includes a trigger condition of conditional handover and at least one candidate target network device. If the trigger condition is met, the terminal device may determine one target network device in the at least one candidate target network device, and then perform a random access procedure to the target network device.

Optionally, the first report may further include information about the source network device and/or the target network device. For example, the first report may include one or more of the following information: cell information of the source network device and/or the target network device, and cell quality information corresponding to the source network device and/or the target network device at at least one time point. In this case, the network device can determine, based on the cell information and the cell quality information in the first report, whether the handover parameter is properly configured.

For a specific implementation of this part, refer to the foregoing descriptions. Details are not described herein again. However, it should be noted that the at least one time point may include one or more of the following time points: a time point of receiving the first message by the terminal device, a time point of detecting, by the terminal device, that the connection between the terminal device and the source network device fails, a time point of detecting, by the terminal device, that the connection between the terminal device and the target network device fails, a time point at which the trigger condition of the conditional handover is met (that is, a time point at which the conditional handover is triggered), and a time point of sending the first report by the terminal device.

Optionally, the first report may further include random access information of the terminal device on the target network device. For specific descriptions of the random access information, refer to the foregoing descriptions. Details are not described herein again. In this case, the target network device can determine, based on the random access information in the first report, whether the random access parameter is proper.

Optionally, the first report may further include handover type information, and the handover type information indicates any handover type of common handover, dual active protocol stack DAPS handover, the conditional handover, or a combination of the DAPS handover and the conditional handover. The network device can further identify, based on the handover type information, a handover parameter to be adjusted.

Optionally, the terminal device may further receive third indication information from the source network device, where the third indication information indicates whether the first report shall be recorded. For a specific implementation of the third indication information, refer to the foregoing descriptions. Details are not described herein again.

It can be learned that, according to the foregoing technical solution, when the connection between the terminal device and the source network device fails, and the connection between the terminal device and the target network device also fails, the terminal device may record various information in the handover process (for example, the fifth indication information or at least one piece of time period information, or quality information of a source cell and a target cell at key time points in the handover process), generate the first report, and send the first report to the third network device. In this way, the network device can determine whether there is a possible handover scenario, and a handover parameter can be more properly configured.

It may be understood that in the foregoing method embodiments, steps or operations implemented by the terminal device may be implemented by a component that may be configured in the terminal device, steps or operations implemented by the network device may be implemented by a component that may be configured in the network device, and steps or operations implemented by the core network device may be implemented by a component that may be configured in the core network device.

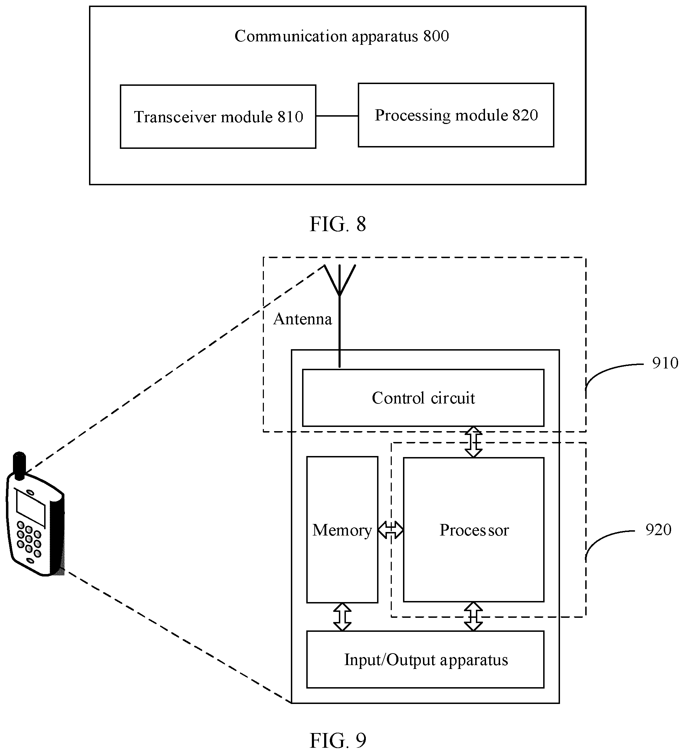

An embodiment of this application further provides a communication apparatus. FIG. 8 is a schematic structural diagram of a communication apparatus according to an embodiment of this application. The communication apparatus 800 includes a transceiver module 810 and a processing module 820. The communication apparatus may be configured to implement a function of the terminal device in any one of the foregoing method embodiments. For example, the communication apparatus may be a terminal device, for example, a handheld terminal device or a vehicle-mounted terminal device. Alternatively, the communication apparatus may be a chip included in a terminal device, or an apparatus including the terminal device, for example, various types of vehicles.

For example, when the communication apparatus is used as a terminal device to perform the method embodiment shown in FIG. 2, the transceiver module 810 is configured to receive a first message from a source network device, where the first message is used to enable the communication apparatus to hand over from the source network device to a target network device. The processing module 820 is configured to maintain data transmission between the communication apparatus and the source network device after the transceiver module 810 receives the first message. The processing module 820 is further configured to detect that a connection between the communication apparatus and the source network device fails. The transceiver module 810 is further configured to send a first report to a third network device. The first report includes first indication information, and the first indication information is used to determine whether the connection between the communication apparatus and the source network device fails before the terminal device accesses the target network device.

In a possible design, the processing module 820 is specifically configured to: before the communication apparatus accesses the target network device, detect that the connection between the communication apparatus and the source network device fails. Correspondingly, the first report may further include one or more of the following time period information: first time period information, where the first time period information indicates a time period from a time point of receiving the first message by the communication apparatus to a time point of detecting, by the communication apparatus, that the connection between the communication apparatus and the source network device fails; second time period information, where the second time period information indicates a time period from a time point of detecting, by the communication apparatus, that the connection between the communication apparatus and the source network device fails to a time point of sending the first report by the communication apparatus; third time period information, where the third time period information indicates a time period from a time point of detecting, by the communication apparatus, that the connection between the communication apparatus and the source network device fails to a time point of accessing the target network device by the communication apparatus; and fourth time period information, where the fourth time period information indicates a time period from a time point of accessing the target network device by the communication apparatus to a time point of sending the first report by the communication apparatus.

In a possible design, the processing module 820 is specifically configured to: after the communication apparatus accesses the target network device, detect that the connection between the communication apparatus and the source network device fails. Correspondingly, the first report may further include one or more of the following time period information: first time period information, where the first time period information indicates a time period from a time point of receiving the first message by the communication apparatus to a time point of detecting, by the communication apparatus, that the connection between the communication apparatus and the source network device fails; second time period information, where the second time period information indicates a time period from a time point of detecting, by the communication apparatus, that the connection between the communication apparatus and the source network device fails to a time point of sending the first report by the communication apparatus; fourth time period information, where the fourth time period information indicates a time period from a time point of accessing the target network device by the communication apparatus to a time point of sending the first report by the communication apparatus; fifth time period information, where the fifth time period information indicates a time period from a time point of receiving the first message by the communication apparatus to a time point of accessing the target network device by the communication apparatus; and sixth time period information, where the sixth time period information indicates a time period from a time point of accessing the target network device by the communication apparatus to a time point of detecting, by the communication apparatus, that the connection between the communication apparatus and the source network device fails.

In a possible design, the transceiver module 810 is further configured to receive conditional handover configuration information from the source network device, where the conditional handover configuration information includes a trigger condition of conditional handover and at least one candidate target network device; and if the trigger condition of the conditional handover is met, the processing module 820 is further configured to determine the target network device in the at least one candidate target network device.

Correspondingly, the first report may further include second indication information. The second indication information indicates that before the trigger condition of the conditional handover is met, the communication apparatus detects that the connection between the communication apparatus and the source network device fails. Alternatively, the second indication information may indicate that after the trigger condition of the conditional handover is met and before the communication apparatus accesses the target network device, the communication apparatus detects that the connection between the communication apparatus and the source network device fails. Alternatively, the second indication information may indicate that after the trigger condition of the conditional handover is met and after the communication apparatus accesses the target network device, the communication apparatus detects that the connection between the communication apparatus and the source network device fails.

In a possible design, the first report further includes one or more of the following information: cell information of the source network device and/or the target network device, and cell quality information corresponding to the source network device and/or the target network device at at least one time point.

In a possible design, the first report may further include information about the at least one time point, and the at least one time point includes one or more of the following time points: a time point of receiving the first message by the communication apparatus, a time point of detecting, by the communication apparatus, that the connection between the communication apparatus and the source network device fails, a time point of accessing the target network device by the communication apparatus, a time point at which the trigger condition of the conditional handover is met, and a time point of sending the first report by the communication apparatus.

In a possible design, the first report may further include handover type information, and the handover type information indicates any handover type of common handover, dual active protocol stack DAPS handover, the conditional handover, or a combination of the DAPS handover and the conditional handover.

In a possible design, the transceiver module 810 is further configured to receive third indication information from the source network device, where the third indication information indicates whether the first report shall be recorded.

In a possible design, the third indication information may specifically indicate whether the first report shall be recorded when the connection between the communication apparatus and the source network device fails before the communication apparatus accesses the target network device; the third indication information may specifically indicate whether the first report shall be recorded when the connection between the communication apparatus and the source network device fails after the communication apparatus accesses the target network device; the third indication information may specifically indicate whether the first report shall be recorded when the connection between the communication apparatus and the source network device does not fail when the communication apparatus receives a first release message from the target network device; the third indication information may specifically indicate whether the first report shall be recorded when the handover type is the combination of the DAPS handover and the conditional handover; or the third indication information may specifically indicate whether the first report shall be recorded when the connection between the communication apparatus and the source network device fails before a first time point when the handover type is the DAPS handover.

The processing module 820 in the communication apparatus may be implemented by at least one processor or a processor-related circuit component, and the transceiver module 810 may be implemented by at least one transceiver, a transceiver-related circuit component, or a communication interface. Operations and/or functions of the modules in the communication apparatus are separately used to implement corresponding procedures of the method shown in FIG. 2, FIG. 3, FIG. 4, FIG. 6, or FIG. 7. For brevity, details are not described herein again. Optionally, the communication apparatus may further include a storage module. The storage module may be configured to store data and/or instructions. The transceiver module 810 and/or the processing module 820 may read the data and/or the instructions in the storage module, to enable the communication apparatus to implement a corresponding method. The storage module may be implemented, for example, by using at least one memory.

The storage module, the processing module, and the transceiver module may exist separately, or all or some of the modules may be integrated. For example, the storage module and the processing module are integrated, or the processing module and the transceiver module are integrated.

FIG. 9 is another schematic structural diagram of a communication apparatus according to an embodiment of this application. The communication apparatus may be specifically a terminal device. For ease of understanding and illustration, in FIG. 9, a mobile phone is used as an example of the terminal device. As shown in FIG. 9, the terminal device includes a processor, and may further include a memory. Certainly, the terminal device may further include a radio frequency circuit, an antenna, an input/output apparatus, and the like. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of descriptions, FIG. 9 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have receiving and sending functions may be considered as a transceiver unit of the terminal device, and the processor that has a processing function may be considered as a processing unit of the terminal device. As shown in FIG. 9, the terminal device includes a transceiver unit 910 and a processing unit 920. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 910 and that is configured to implement the receiving function may be considered as a receiving unit, and a component that is in the transceiver unit 910 and that is configured to implement the sending function may be considered as a sending unit. In other words, the transceiver unit 910 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like. It should be understood that the transceiver unit 910 is configured to perform a sending operation and a receiving operation on a terminal device side in the foregoing method embodiments, and the processing unit 920 is configured to perform an operation other than the sending operation and the receiving operation of the terminal device in the foregoing method embodiments.

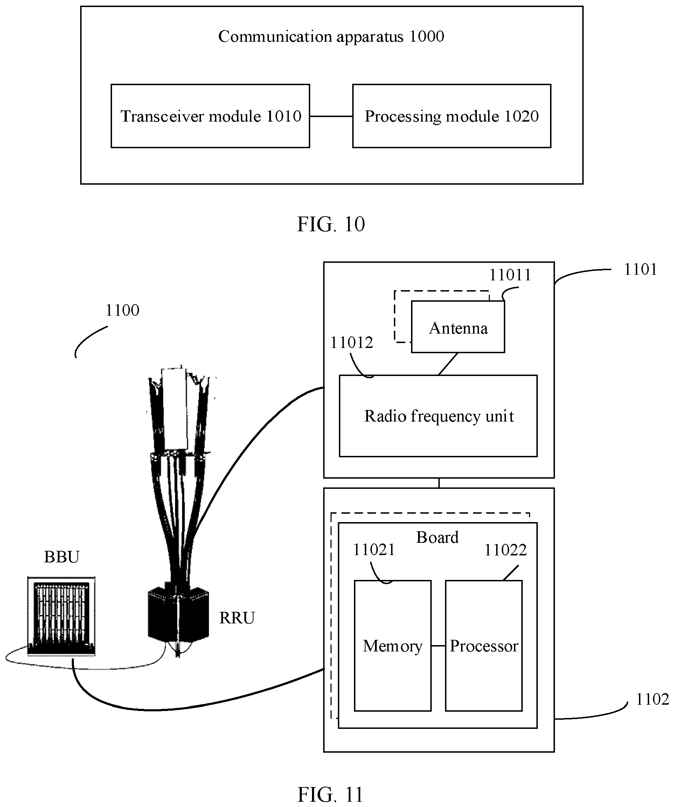

An embodiment of this application further provides another communication apparatus. FIG. 10 is a schematic structural diagram of a communication apparatus according to an embodiment of this application. The communication apparatus 1000 includes a transceiver module 1010 and a processing module 1020. The communication apparatus may be configured to implement a function of the network device in any one of the foregoing method embodiments. For example, the communication apparatus may be a network device or a chip included in the network device.

For example, when the communication apparatus is used as a network device to perform the method embodiment shown in FIG. 2, the transceiver module 1010 is configured to receive a first report from a terminal device, where the first report includes first indication information, and the first indication information is used to determine whether a connection between the terminal device and a source network device fails before the terminal device accesses a target network device; and the processing module 1020 is configured to send the first report to the source network device by using the transceiver module 1010.

In a possible design, the connection between the terminal device and the source network device may fail before the terminal device accesses the target network device. Correspondingly, the first report may further include one or more of the following time period information:
first time period information, where the first time period information indicates a time period from a time point of receiving a first message by the terminal device to a time point of detecting, by the terminal device, that the connection between the terminal device and the source network device fails, and the first message is used to enable the terminal device to hand over from the source network device to the target network device; second time period information, where the second time period information indicates a time period from a time point of detecting, by the terminal device, that the connection between the terminal device and the source network device fails to a time point of sending the first report by the terminal device; third time period information, where the third time period information indicates a time period from a time point of detecting, by the terminal device, that the connection between the terminal device and the source network device fails to a time point of accessing the target network device by the terminal device; and fourth time period information, where the fourth time period information indicates a time period from a time point of accessing the target network device by the terminal device to a time point of sending the first report by the terminal device.

In a possible design, the connection between the terminal device and the source network device may alternatively fail after the terminal device accesses the target network device. Correspondingly, the first report further includes one or more of the following time period information:
first time period information, where the first time period information indicates a time period from a time point of receiving a first message by the terminal device to a time point of detecting, by the terminal device, that the connection between the terminal device and the source network device fails, and the first message is used to enable the terminal device to hand over from the source network device to the target network device; second time period information, where the second time period information indicates a time period from a time point of detecting, by the terminal device, that the connection between the terminal device and the source network device fails to a time point of sending the first report by the terminal device; fourth time period information, where the fourth time period information indicates a time period from a time point of accessing the target network device by the terminal device to a time point of sending the first report by the terminal device; fifth time period information, where the fifth time period information indicates a time period from a time point of receiving the first message by the terminal device to a time point of accessing the target network device by the terminal device; and sixth information period information, where the sixth time period information indicates a time period from a time point of accessing the target network device by the terminal device to a time point of detecting, by the terminal device, that the connection between the terminal device and the source network device fails.

In a possible design, the first report may further include second indication information. The second indication information indicates that before a trigger condition of conditional handover is met, the terminal device detects that the connection between the terminal device and the source network device fails. Alternatively, the second indication information indicates that after the trigger condition of the conditional handover is met and before the terminal device accesses the target network device, the terminal device detects that the connection between the terminal device and the source network device fails. Alternatively, the second indication information indicates that after the trigger condition is met and after the terminal device accesses the target network device, the terminal device detects that the connection between the terminal device and the source network device fails.

In a possible design, the first report may further include one or more of the following information: cell information of the source network device and/or the target network device, and cell quality information corresponding to the source network device and/or the target network device at at least one time point.

In a possible design, the first report further includes information about the at least one time point, and the at least one time point includes one or more of the following time points: a time point of receiving the first message by the terminal device, a time point of detecting, by the terminal device, that the connection between the terminal device and the source network device fails, a time point of accessing the target network device by the terminal device, a time point at which the trigger condition of the conditional handover is met, and a time point of sending the first report by the terminal device.

In a possible design, the first report may further include handover type information, and the handover type information indicates any handover type of common handover, dual active protocol stack DAPS handover, the conditional handover, or a combination of the DAPS handover and the conditional handover.

It should be understood that the processing module 1020 in the communication apparatus may be implemented by at least one processor or a processor-related circuit component, and the transceiver module 1010 may be implemented by at least one transceiver, a transceiver-related circuit component, or a communication interface. Operations and/or functions of the modules in the communication apparatus are separately used to implement corresponding procedures of the method shown in FIG. 2, FIG. 3, FIG. 4, FIG. 6, or FIG. 7. For brevity, details are not described herein again. Optionally, the communication apparatus may further include a storage module. The storage module may be configured to store data and/or instructions. The transceiver module 1010 and/or the processing module 1020 may read the data and/or the instructions in the storage module, to enable the communication apparatus to implement a corresponding method. The storage module may be implemented, for example, by using at least one memory.

The storage module, the processing module, and the transceiver module may exist separately, or all or some of the modules may be integrated. For example, the storage module and the processing module are integrated, or the processing module and the transceiver module are integrated.

FIG. 11 is another schematic structural diagram of a communication apparatus according to an embodiment of this application. The communication apparatus may be specifically a network device, for example, a base station, configured to implement the function of the network device in any one of the foregoing method embodiments.

The network device includes one or more radio frequency units, for example, a remote radio unit (remote radio unit, RRU) 1101 and one or more baseband units (baseband units, BBUs) (which may also be referred to as digital units, digital units, DUs) 1102. The RRU 1101 may be referred to as a transceiver unit, a transceiver machine, a transceiver circuit, a transceiver, or the like, and may include at least one antenna 11011 and a radio frequency unit 11012. The RRU 1101 is mainly configured to receive and send a radio frequency signal and convert the radio frequency signal and a baseband signal. The BBU 1102 is mainly configured to perform baseband processing, control the base station, and the like. The RRU 1101 and the BBU 1102 may be physically disposed together, or may be physically disposed separately, namely, a distributed base station.

The BBU 1102 is a control center of the base station, may also be referred to as a processing unit, and is mainly configured to complete baseband processing functions such as channel coding, multiplexing, modulation, and spectrum spreading. For example, the BBU (the processing unit) 1102 may be configured to control the base station to execute the operation procedure related to the network device in the foregoing method embodiments.

In an example, the BBU 1102 may include one or more boards, and a plurality of boards may jointly support a radio access network (for example, an LTE network) using a single access standard, or may separately support radio access networks (for example, anLTE network, a 5G network, or another network) using different access standards. The BBU 1102 may further include a memory 11021 and a processor 11022, and the memory 11021 is configured to store necessary instructions and necessary data. The processor 11022 is configured to control the base station to perform a necessary action, for example, is configured to control the base station to perform a sending operation in the foregoing method embodiments. The memory 11021 and the processor 11022 may serve one or more boards. In other words, a memory and a processor may be disposed on each board. Alternatively, a plurality of boards may share a same memory and a same processor. In addition, a necessary circuit may further be disposed on each board.

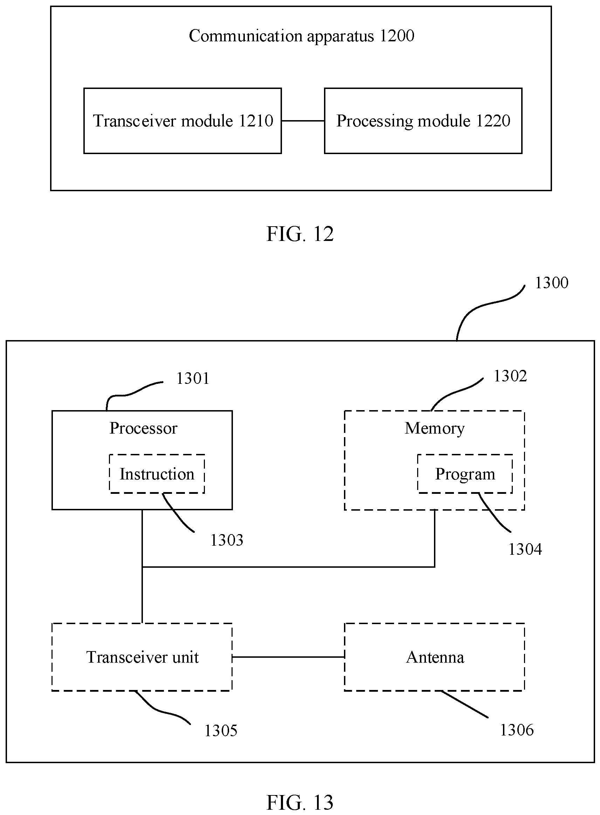

An embodiment of this application further provides another communication apparatus. FIG. 12 is a schematic structural diagram of a communication apparatus according to an embodiment of this application. The communication apparatus 1200 includes a transceiver module 1210 and a processing module 1220. The communication apparatus may be configured to implement a function of the core network device in any one of the foregoing method embodiments. For example, the communication apparatus may be a network device or a chip included in the core network device.

For example, when the communication apparatus is used as a core network device to perform the foregoing method embodiments, the transceiver module 1210 is configured to receive a first report from a third network device; and the processing module 1220 is configured to send the first report to a source network device by using the transceiver module 1210. The first report may be the first report in any one of the foregoing method embodiments.

In a possible design, the transceiver module 1210 is further configured to send capability information of the terminal device to the source network device, where the capability information indicates whether the terminal device supports recording the first report.

FIG. 13 is a schematic structural diagram of another communication apparatus according to an embodiment of this application. The communication apparatus 1300 may be configured to implement the methods performed by the core network device described in the foregoing method embodiments. The communication apparatus 1300 may be a chip or a core network device.

The communication apparatus 1300 includes one or more processors 1301. The one or more processors 1301 may support the communication apparatus 1300 in implementing the method of the core network device in the foregoing method embodiments. The processor 1301 may be a general-purpose processor, a dedicated processor, or the like. For example, the processor 1301 may be a central processing unit (central processing unit, CPU) or a baseband processor. The baseband processor may be configured to process communication data. The CPU may be configured to control the communication apparatus (for example, the network device, the terminal device, or the chip) to execute a software program and process data of the software program. The communication apparatus 1300 may further include a transceiver unit 1305, configured to input (receive) and output (send) a signal.

For example, the communication apparatus 1300 may be the chip, and the transceiver unit 1305 may be an input and/or output circuit of the chip, or the transceiver unit 1305 may be a communication interface of the chip. The chip may be used as a component of the terminal device, the network device, or another wireless communication device.

The communication apparatus 1300 may include one or more memories 1302. The memory 1302 stores a program 1304. The program 1304 may be run by the processor 1301 to generate instructions 1303, to enable the processor 1301 to perform, according to the instructions 1303, the methods described in the foregoing method embodiments. Optionally, the memory 1302 may further store data. Optionally, the processor 1301 may further read the data stored in the memory 1302. The data and the program 1304 may be stored in a same storage address, or the data and the program 1304 may be stored in different storage addresses.

The processor 1301 and the memory 1302 may be disposed separately, or may be integrated together, for example, integrated on a board or a system-on-a-chip (system-on-a-chip, SoC).

The communication apparatus 1300 may further include a transceiver unit 1305 and an antenna 1306. The transceiver unit 1305 may be referred to as a transceiver, a transceiver circuit, or a transceiver, and is configured to implement receiving and sending functions of the communication apparatus by using the antenna 1306. An embodiment of this application further provides a chip system, including a processor, where the processor is coupled to a memory. The memory is configured to store a program or instructions. When the program or the instructions are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be separated from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processor unit, CPU), a network processor (network processor, NP), a digital signal processor (digital signal processor, DSP), a microcontroller unit (micro controller unit, MCU), a programmable logic device (programmable logic device, PLD) or another integrated chip.

It should be understood that steps in the foregoing method embodiments may be completed by using a logic circuit in the form of hardware or instructions in the form of software in the processor. The steps of the methods according to embodiments of this application may be directly performed and completed by a hardware processor, or may be performed and completed by using a combination of hardware and software modules in the processor.

An embodiment of this application further provides a computer-readable storage medium. The computer storage medium stores computer-readable instructions. When a computer reads and executes the computer-readable instructions, the computer is enabled to perform the method in any one of the foregoing method embodiments.

An embodiment of this application further provides a computer program product. When a computer reads and executes the computer program product, the computer is enabled to perform the method in any one of the foregoing method embodiments.

An embodiment of this application further provides a communication system. The communication system includes a terminal device and a third network device. Optionally, the communication system may further include a source network device and a target network device. The third network device may be a same network device as the source network device or the target network device, or the third network device may be another network device different from the source network device and the target network device. Optionally, the communication system may further include a core network device.

It should be understood that, the processor mentioned in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that various numbers in various embodiments of this application are merely used for differentiation for ease of description. Sequence numbers of the foregoing processes do not mean execution sequences. The execution sequences of the processes should be determined based on functions and internal logic of the processes, and should not be construed as any limitation on the implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate components may or may not be physically separate, and components displayed as units may or may not be physical units. To be specific, the components may be located at one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving a first message from a source network device, wherein the first message is used to enable a terminal device to hand over from the source network device to a target network device;
maintaining data transmission between the terminal device and the source network device after receiving the first message;
detecting that a connection between the terminal device and the source network device fails; and
sending a first report, wherein the first report comprises first indication information, and the first indication information is used to determine whether the connection between the terminal device and the source network device fails before the terminal device accesses the target network device.

2. The method according to claim 1, wherein the detecting that a connection between the terminal device and the source network device fails comprises:
before the terminal device accesses the target network device, detecting that the connection between the terminal device and the source network device fails; and
the first report further comprises one or more of the following time period information:
first time period information, wherein the first time period information indicates a time period from a time point of receiving the first message to a time point of detecting that the connection between the terminal device and the source network device fails;
second time period information, wherein the second time period information indicates a time period from a time point of detecting that the connection between the terminal device and the source network device fails to a time point of sending the first report;
third time period information, wherein the third time period information indicates a time period from a time point of detecting that the connection between the terminal device and the source network device fails to a time point of accessing the target network device by the terminal device; and
fourth time period information, wherein the fourth time period information indicates a time period from a time point of accessing the target network device by the terminal device to a time point of sending the first report.

3. The method according to claim 1, wherein the detecting that a connection between the terminal device and the source network device fails comprises:
after the terminal device accesses the target network device, detecting that the connection between the terminal device and the source network device fails; and
the first report further comprises one or more of the following time period information:
first time period information, wherein the first time period information indicates a time period from a time point of receiving the first message to a time point of detecting that the connection between the terminal device and the source network device fails;
second time period information, wherein the second time period information indicates a time period from a time point of detecting that the connection between the terminal device and the source network device fails to a time point of sending the first report;
fourth time period information, wherein the fourth time period information indicates a time period from a time point of accessing the target network device by the terminal device to a time point of sending the first report;
fifth time period information, wherein the fifth time period information indicates a time period from a time point of receiving the first message to a time point of accessing the target network device by the terminal device; and
sixth information period information, wherein the sixth time period information indicates a time period from a time point of accessing the target network device by the terminal device to a time point of detecting that the connection between the terminal device and the source network device fails.

4. The method according to any one of claims 1 to 3, wherein the method further comprises:
receiving conditional handover configuration information from the source network device, wherein the conditional handover configuration information comprises a trigger condition of conditional handover and at least one candidate target network device; and
if the trigger condition is met, determining the target network device in the at least one candidate target network device, wherein
the first report further comprises second indication information, and the second indication information indicates that the failure of the connection between the terminal device and the source network device is detected before the trigger condition is met, or the second indication information indicates that the failure of the connection between the terminal device and the source network device is detected after the trigger condition is met and before the terminal device accesses the target network device, or the second indication information indicates that the failure of the connection between the terminal device and the source network device is detected after the trigger condition is met and after the terminal device accesses the target network device.

5. The method according to any one of claims 1 to 4, wherein the first report further comprises one or more of the following information:
cell information of the source network device and/or the target network device, and cell quality information corresponding to the source network device and/or the target network device at at least one time point.

6. The method according to claim 5, wherein the first report further comprises information about the at least one time point, and the at least one time point comprises one or more of the following time points:
a time point of receiving the first message, a time point of detecting that the connection between the terminal device and the source network device fails, a time point of accessing the target network device by the terminal device, a time point at which the trigger condition of the conditional handover is met, and a time point of sending the first report.

7. The method according to any one of claims 1 to 6, wherein the first report further comprises handover type information, and the handover type information indicates any handover type of common handover, dual active protocol stack DAPS handover, the conditional handover, or a combination of the DAPS handover and the conditional handover.

8. The method according to any one of claims 1 to 7, wherein the method further comprises:
receiving third indication information from the source network device, wherein the third indication information indicates whether the first report shall be recorded.

9. The method according to claim 8, wherein that the third indication information indicates whether the first report shall be recorded comprises:
the third indication information indicates whether the first report shall be recorded when the connection between the terminal device and the source network device fails before the terminal device accesses the target network device;
the third indication information indicates whether the first report shall be recorded when the connection between the terminal device and the source network device fails after the terminal device accesses the target network device;
the third indication information indicates whether the first report shall be recorded when the connection between the terminal device and the source network device does not fail when the terminal device receives a first release message from the target network device;
the third indication information indicates whether the first report shall be recorded when the handover type is the combination of the DAPS handover and the conditional handover; or
the third indication information indicates whether the first report shall be recorded when the connection between the terminal device and the source network device fails before a first time point when the handover type is the DAPS handover.

10. A communication method, wherein the method comprises:
receiving a first report from a terminal device, wherein the first report comprises first indication information and/or seventh indication information, the first indication information is used to determine whether a connection between the terminal device and a source network device fails before the terminal device accesses a target network device, and the seventh indication information indicates whether the connection between the terminal device and the source network device is successfully resumed, or the seventh indication information indicates whether the connection between the terminal device and the source network device fails after the connection is successfully resumed; and
sending the first report to the source network device.

11. The method according to claim 10, wherein the connection between the terminal device and the source network device fails before the terminal device accesses the target network device; and
the first report further comprises one or more of the following time period information:
first time period information, wherein the first time period information indicates a time period from a time point of receiving a first message by the terminal device to a time point of detecting, by the terminal device, that the connection between the terminal device and the source network device fails, and the first message is used to enable the terminal device to hand over from the source network device to the target network device;
second time period information, wherein the second time period information indicates a time period from a time point of detecting, by the terminal device, that the connection to the source network device fails to a time point of sending the first report by the terminal device;
third time period information, wherein the third time period information indicates a time period from a time point of detecting, by the terminal device, that the connection between the terminal device and the source network device fails to a time point of accessing the target network device by the terminal device; and
fourth time period information, wherein the fourth time period information indicates a time period from a time point of accessing the target network device by the terminal device to a time point of sending the first report by the terminal device.

12. The method according to claim 10, wherein the connection between the terminal device and the source network device fails after the terminal device accesses the target network device; and
the first report further comprises one or more of the following time period information:
first time period information, wherein the first time period information indicates a time period from a time point of receiving a first message by the terminal device to a time point of detecting that the connection between the terminal device and the source network device fails, and the first message is used to enable the terminal device to hand over from the source network device to the target network device;
second time period information, wherein the second time period information indicates a time period from a time point of detecting that the connection between the terminal device and the source network device fails to a time point of sending the first report;
fourth time period information, wherein the fourth time period information indicates a time period from a time point of accessing the target network device by the terminal device to a time point of sending the first report by the terminal device;
fifth time period information, wherein the fifth time period information indicates a time period from a time point of receiving the first message by the terminal device to a time point of accessing the target network device by the terminal device; and
sixth time period information, wherein the sixth time period information indicates a time period from a time point of accessing the target network device by the terminal device to a time point of detecting, by the terminal device, that the connection between the terminal device and the source network device fails.

13. The method according to any one of claims 10 to 12, wherein the first report further comprises second indication information; and
the second indication information indicates that before a trigger condition of conditional handover is met, the terminal device detects that the connection between the terminal device and the source network device fails, or the second indication information indicates that after the trigger condition is met and before the terminal device accesses the target network device, the terminal device detects that the connection between the terminal device and the source network device fails, or the second indication information indicates that after the trigger condition is met and after the terminal device accesses the target network device, the terminal device detects that the connection between the terminal device and the source network device fails.

14. The method according to any one of claims 10 to 13, wherein the first report further comprises one or more of the following information:
cell information of the source network device and/or the target network device, and cell quality information corresponding to the source network device and/or the target network device at at least one time point.

15. The method according to claim 14, wherein the first report further comprises information about the at least one time point, and the at least one time point comprises one or more of the following time points:
a time point of receiving the first message by the terminal device, a time point of detecting, by the terminal device, that the connection between the terminal device and the source network device fails, a time point of accessing the target network device by the terminal device, a time point at which the trigger condition of the conditional handover is met, and a time point of sending the first report by the terminal device.

16. The method according to any one of claims 10 to 15, wherein the first report further comprises handover type information, and the handover type information indicates any handover type of common handover, dual active protocol stack DAPS handover, the conditional handover, or a combination of the DAPS handover and the conditional handover.

17. A communication apparatus, wherein the apparatus comprises units configured to perform the steps of the method according to any one of claims 1 to 9, or comprises units configured to perform the steps of the method according to any one of claims 10 to 16.

18. A communication apparatus, wherein the apparatus comprises at least one processor, and the at least one processor is coupled to at least one memory; and
the at least one processor is configured to execute a computer program or instructions stored in the at least one memory, to enable the apparatus to perform the method according to any one of claims 1 to 9 or the method according to any one of claims 10 to 16.

19. A computer-readable storage medium, configured to store instructions, wherein when the instructions are executed, the method according to any one of claims 1 to 9 or the method according to any one of claims 10 to 16 is implemented.

20. A communication apparatus, comprising a processor and an interface circuit, wherein
the interface circuit is configured to exchange code instructions with the processor; and
the processor is configured to run the code instructions, to perform the method according to any one of claims 1 to 9 or the method according to any one of claims 10 to 16.

21. A computer program product, wherein when a computer reads and executes the computer program product, the computer is enabled to perform the method according to any one of claims 1 to 9, or perform the method according to any one of claims 10 to 16.

22. A communication system, wherein the system comprises a terminal device and a third network device, the terminal device is configured to perform the method according to any one of claims 1 to 9, and the third network device is configured to perform the method according to any one of claims 10 to 16.

23. The system according to claim 22, wherein the system further comprises one or more of a source network device, a target network device, and a core network device; and
the third network device and the source network device or the target network device are a same network device, or the third network device is a network device different from the source network device and the target network device.
